# EUROPÄISCHE PATENTSCHRIFT

(11) **EP 2 593 509 B1**
(45) Veröffentlichungstag und Bekanntmachung des Hinweises auf die Patenterteilung: **19.10.2016**
(21) Anmeldenummer: 11770678.8
(22) Anmeldetag: 10.07.2011
(51) Int. Cl.: C08L 17/00, C08L 95/00, E01C 5/00, C08J 3/00

(54) **VERFAHREN ZUR HERSTELLUNG VON AGGLOMERATEN, DIE GUMMI UND WACHS AUFWEISEN, DANACH HERGESTELLTE AGGLOMERATE UND IHRE VERWENDUNG IN ASPHALTEN ODER BITUMENMASSEN**
METHOD FOR PRODUCING AGGLOMERATES HAVING RUBBER AND WAX, AGGLOMERATES PRODUCED ACCORDING TO SAID METHOD, AND USE OF SAID AGGLOMERATES IN ASPHALTS OR BITUMEN MASSES
PROCÉDÉS DE FABRICATION D'AGGLOMÉRATS, QUI COMPRENNENT DU CAOUTCHOUC ET DE LA CIRE, AGGLOMÉRATS OBTENUS SELON CE PROCÉDÉ ET LEUR UTILISATION DANS DES ASPHALTES OU DES MATIÈRES BITUMINEUSES

(30) Priorität: 12.07.2010 DE 102010026950
(43) Veröffentlichungstag der Anmeldung: 22.05.2013
(73) Patentinhaber: Sasol Wax GmbH, 20457 Hamburg (DE); Storimpex Im- Und Export GmbH, 21509 Glinde (DE)
(72) Erfinder: BUTZ, Thorsten, 21244 Buchholz (DE); NÖLTING, Matthias, 22589 hamburg (DE); WINKELMANN, Gunnar, D-21029 Hamburg (DE)
(74) Vertreter: Kassner, Klaus
(86) Internationale Anmeldenummer: PCT/DE2011/001441
(87) Internationale Veröffentlichungsnummer: WO 2012/010150

(56) Entgegenhaltungen:
- WO-A1-94/14896
- WO-A1-2010/023173

## Beschreibung

### Technisches Gebiet

Die Erfindung betrifft ein Verfahren zur Herstellung eines Schüttgutes von Agglomeraten, die Gummipartikel und Wachs aufweisen, insbesondere in Form von Pellets. Ferner betrifft die Erfindung die Zusammensetzung des verfahrensgemäß hergestellten Agglomerats, insbesondere in einem Pellet, und die Verwendung dieses Schüttgutes für die Herstellung von Asphalt oder eines Mischgutes mit einer Bitumenmasse oder einer Bitumenmasse mit darin verbesserten Eigenschaften.

### Stand der Technik

Es ist allgemein bekannt, dass zur Verbesserung der Leistungsfähigkeit und Dauerhaftigkeit von im Strassenbau, z.B. der Vermeidung von Verformungen wie Spurrinnen und der gleichzeitigen Vermeidung der Rissbildung durch Kälteeinwirkung oder mechanische Ermüdung, diese Asphalte mit verschiedenen Additiven modifiziert werden. Als Additive werden u. a. Elastomere (z.B. SBS und SBR), Plastomere (z.B. EVA und PE) oder Gummipartikel aus dem Reifenrecycling verwendet. Außerdem ist eine zweite Gruppe von Additiven im Gebrauch, die als Wachse klassifiziert werden, z.B. Fischer-Tropsch Paraffine, Montanwachse und Amidwachse. Diese Additive verbessern ebenfalls den Widerstand gegen Verformungen, bewirken jedoch wegen fehlender elastischer Komponente nur geringfügige oder keine Verbesserung der Ermüdungs- und Kälteeigenschaften des Asphaltes. Ein wichtiger Effekt der Wachsadditive ist die Senkung der Viskosität des Bitumens und des Asphaltmischgutes bei den Herstellungs- und Verarbeitungstemperaturen. Dies ermöglicht eine Vereinfachung der Herstellung von Asphaltmischgut und Asphaltschichten sowie die Reduktion der Herstellungs- und Verarbeitungstemperatur. Daraus resultieren Energieeinsparungen und verringerte Umweltbelastungen.

Grundsätzlich werden die Additive vor der Herstellung des Asphaltes homogen in das Bindemittel Bitumen eingemischt oder direkt während der Herstellung der Asphalte zugegeben.

Die Modifizierung mit Gummi erfolgt entweder im Nass verfahren oder im Trockenverfahren. Im Naßverfahren werden ca. 5-20 % Gummipartikel in heißes (160-200°C) Bitumen eingebracht und für 1 - 4 Stunden gerührt. Dabei geht nur ein kleiner Teil des Gummis in Lösung und der Rest quillt durch die Aufnahme von Ölbestandteilen des Bitumens. Die resultierende Mischung bleibt inhomogen und erfordert bis zur Asphaltherstellung ständiges Rühren, um das Absinken der Gummipartikel zu verhindern. Die Viskosität des Bitumens wird durch das Gummi stark erhöht und ändert sich mit der Lagerungsdauer durch Quellungs- und Depolymerisationsprozesse, was Diedrich in seinem Artikel "Der Einsatz von modifiziertem Altgummimehl in nordamerikanischen Straßenbelägen", Asphalt 5/2000, 6-10 beschrieben hat.

Im Trockenverfahren werden die Gummipartikel direkt in den Asphaltmischer gegeben und mit Bitumen und Mineralstoffen gemischt. Nachteilig ist, dass für eine homogene Verteilung die Mischzeit verlängert werden muss. Auch bei Mischzeitverlängerung ist die Zeit zur Wechselwirkung mit dem Bitumen zu kurz, um eine mit dem Naßverfahren vergleichbare Quellung und Anlösung zu erreichen. Es besteht die Gefahr, dass die erwünschten dicken Bindemittelfilme und eine hohe Klebkraft des Bindemittels nicht erreicht werden. Deshalb ist die Qualität des im Trockenverfahren hergestellten gummimodifizierten Asphaltes im Allgemeinen niedriger.

Um die Nachteile des Trockenverfahrens zu vermeiden, kann auch aus Gummipartikeln und Bitumen ein Masterbatch hergestellt werden, der in granulierter Form produziert wird, wie es z. B. das so genannte Produkt Tecroad realisiert.

Im Einzelnen hat sich die Fachwelt wiederholt bemüht, Verbesserungen bei der Verwendung von Gummi für Asphalte vorzuschlagen.

So ist es nach EP 1 873 212 B1 bekannt, die Modifizierung von Gummipulver durch Quellung mit 2-40 % aromatischen Ölen und die anschließende Modifizierung von Bitumen im Nassverfahren durchzuführen, wobei die Vorquellung die Temperatur und die Mischdauer bei der Bitumenmodifizierung reduziert. Nachteilig ist, dass
- die gequollenen Gummipulver nicht unbedingt viskositätsreduzierend wirken,
- bei Umgebungstemperaturen der Widerstand gegen Verformung reduziert wird,
- die Kompatibilität von Gummi und Bitumen nicht gegeben ist,
- gesundheits-/umweltschädigende aromatische Öle verwendet werden,
- das Produkt in einer Form vorliegt, das nicht leicht und sicher gelagert, transportiert und mit den in Asphaltmischanlagen üblicherweise vorhandenen Anlagen dosiert (pneumatischen Förderung, Schneckenförderung) werden kann,
- das Produkt für die Direktzugabe in den Asphaltmischer ungeeignet ist, was den Aufwand (Zeit, Energie, Investition für Modifizierungsanlage) für die vorherige Bitumenmodifizierung erhöht und
- derartige Additive als feine Pulver wegen der Gefahr von Staubexplosionen auf diese Weise nur unter Einhaltung aufwendiger Bedingungen gefördert werden können.

Des Weiteren wurde gemäss WO/1997/026299 und DE 196 01 285 A1 ein Gummi umfassendes Granulat, Verfahren zu seiner Herstellung und Verfahren zur Herstellung einer Asphaltmischung unter Verwendung des Granulats bekannt.

Danach wird ein rieselfähiges Granulat aus 50-95 % Gummi und Bitumen oder polymerem Kunststoff (thermoplastische Elastomere oder Plastomere) beschrieben, dessen Bestandteile sich bei Temperaturen > 130°C bei Einwirkung von Scherkräften gleichmäßig verteilen. Es können bis zu 25 % Additive enthalten sein (Schwefel, Vulkanisationsbeschleuniger, Schweröl, Fettsäuren, Zellulosefasern). Das Granulat kann aus einer bei hohen Temperaturen in einem Kneter homogenisiert/chemisch verbundenen Masse oder durch Pressen der Einzelkomponenten bei niedriger Temperatur (Kollergang, Lochscheibe) hergestellt werden. Die Herstellung einer Gummiasphaltmischung für Straßendecken durch Zugabe des Granulates in Asphaltmischprozess zu den Mineralstoffen oder zum Bitumen ist damit möglich.

Auch hier überwiegen Nachteile, die sich gegen eine Viskositätsreduzierung richten und Emissionen sowie Verformungen zulassen. Außerdem können dem Bitumen ölige Bestanteile entzogen werden, was zu einer Verhärtung des Bitumens führt.

Verfährt nun der Fachmann nach der Methode zur Herstellung von Kalkhydrat-Pellets zur Verwendung bei der Asphaltherstellung und/oder Bodenkonditionierung mit Pelletierung des Kalkhydrates und einem Bindemittel (zu 0,5-69 %) entsprechend der US 2008/0216712 A1, so kann er feststellen, dass Kalkhydrat der Verbesserung der Wasserbeständigkeit von Asphalt und der Haftung des Bindemittels an den Mineralstoffen dient und Gummi und Wachs in dieser Veröffentlichung als Bindemittel fungieren.

Dabei kann das Bindemittel auf wässriger Basis beruhen oder hydrophob sein und zumindest eine der folgenden Komponenten enthalten: Bitumen, Plastomere, Elastomere, Gummi, gemahlener Reifengummi, pre-reacted gemahlener Reifengummi. Das Pellet kann bis zu 30 % eines Additivs enthalten (aliphatisches Erdöldestillat, Plastomere, Elastomere, Gummi, pre-reacted Reifengummi). Als zusätzliche Komponente kann enthalten sein: Rheology-modifier, structural additive, Lösungsmittel, Farbstoffe.

Als organische Bindemittel für das Pellet werden Öle und Wachse genannt, und das Pellet kann in einer Ausgestaltung aus einem Kern aus Kalkhydrat und einer Schale des Bindemittels bestehen, wobei die Schale wiederum aus Bitumen und Hochtemperatur Wachsen bestehen kann.

Nach dieser Analyse findet der Fachmann keine Hinweise, die zu einer Viskositätsreduzierung und Verbesserung des Widerstands gegen Verformung führen. Vielmehr muss er schlussfolgern, dass auch hier dem Bitumen nachteilig ölige Bestanteile entzogen werden können.

Eine weitere Ausschau auf WO 94/14896 und CA 2152774 offenbart ein Verfahren zur Herstellung einer Bitumenzubereitung. Dort werden Gummipartikel aus Altreifen durch Erhitzung und Scherung in einem aromatenreichen Kohlenwasserstofföl gequollen und zumindest partiell depolymerisiert. Dieses Material wird in Bitumen dispergiert und ein Compatibilizer (flüssiges Gummi) sowie, falls erforderlich, ein Vernetzer werden zugesetzt, um ein lagerstabiles Bindemittel zu erhalten. Es erfolgt die Herstellung von so genannten Masterbatches mit 25-80 % dispergiertem, stabilisiertem Gummi in Bitumen, das mit Füllern und Polymeren zu einem Pellet geformt wird.

Vorteile für eine zielsichere Verdichtung, Energieeinsparung, Emissionsreduzierung und einen Widerstand gegen Verformung finden sich hier nicht. Nachteilig werden sogar gesundheits-/umweltschädigende aromatische Öle verwendet.

In dem Patent DE 601 21 318 T2 für ein Verfahren zur Herstellung eines körnigen Kautschukmaterials und dessen Verwendung in Bitumen wird die Herstellung von Körnchen aus Kautschuk, z.B. aus Altreifen, und einem Thermoklebstoff (Polyolefine, z.B. PE, PP, EVA) mit optionalem Zusatz von Fasern in einem Strangpressverfahren gelehrt. Die durch Reibung entstehende Wärme von 80-300°C soll den Thermoklebstoff zum Schmelzen bringen. Polyolefine wirken im Asphalt viskositätserhöhend. Die Gefahr, dass dem Bitumen ölige Bestandteile entzogen werden, was zu besagter Verhärtung des Bitumens führt, besteht weiter.

Bei einem gemäss dem Patent DE 44 30 819 C1 gefundenen Verfahren zur Herstellung von Bitumengemischen, insbesondere Straßenbauasphalt, mit Zusatz von Gummi und Aktivkohle verringert die Aktivkohle dampf-/ gasförmige Emissionen bei der Herstellung von Heißasphalt und die Elution von Schadstoffen durch Wasser bei mit teerhaltigem Recycling-Asphalt hergestelltem Kaltasphalt. Gummi wird hier gemeinsam mit oder getrennt von der Aktivkohle vor dem Bitumen auf die heißen Mineralstoffe gegeben oder zuvor mit dem Bitumen gemischt. Jedoch werden viskositätsreduzierende Wirkungen und ein erhöhter Widerstand gegen Verformung nicht gelehrt.

Mit einem Gussasphalt gemäss der CH 694 430 A5 soll durch Zusatz von Gummigranulat, vorzugsweise aus Altreifen, die im Vergleich zum Gussasphalt niedrigere Dichte des Gummigranulates zu einer Anreicherung an der Oberfläche der Asphaltschicht führen, um eine Elastifizierung der Oberfläche, Lärmdämmung, Verbesserung der Gleitschutzeigenschaften zu schaffen. Der Fachmann erfährt wiederholt, dass hieraus Anregungen, die zu einer Viskositätsreduzierung führen, den Widerstand gegen Verformungen erhöhen, Lagerhaltung und Transport sowie Dosierung vereinfachen und eine Verhärtung des Bitumens verhindern, nicht entnehmbar sind.

Es offenbaren auch die Veröffentlichungen
- JP 2004060390 A, in der ein Asphalt mit 2-Komponenten-Epoxyharz, wobei die Hauptkomponente des Epoxidharzes der Asphaltmischung zugesetzt und der Härter wird in Form eines in Gummipartikel aufgenommenen Quellungsmittels eingebracht wird,
- JP 2008050841 A, wonach eine Gitterbodenplatte zum Schutz von "Paved surface" sowie zur Geräuschreduzierung und Verbesserung der Griffigkeit führt und die Platte aus Altreifengummi und Polyethylen hergestellt wird,
- JP 10338812 A mit einer wasserquellbaren Zusammensetzung und "Waterstop material", bestehend aus wasserquellbarem Ton, Bitumen, temperatursensitiven Verbesserern, u.a. Gummi und verstärkenden Füllern,
- DE 42 32 907 A1 bei in Wasser quellfähigen, aber gegen Wasser und viele Chemikalien beständigen Produkten zur Herstellung von Dichtungen mit massiver oder zelliger Struktur, dass als Reaktand an Stelle von Wasser zur Modifizierung der Produkteigenschaften auch eine Bitumenemulsion verwendet und als kostengünstiger Füllstoff u.a. Gummimehl zugegeben werden kann, jedoch kein Bezug zu Asphalt besteht und
- DE 24 08 690 C2, wonach thermoplastische Massen, die durch Mischung von Kautschukmaterialstücken, z. B. aus Altreifen, und thermoplastischen Bindemitteln, z.B. PE, EVA, SBS hergestellt werden,
keine Gesichtspunkte, die die zuvor analysierten Nachteile beseitigen.

Schließlich befasst sich aber die US 2010/0056669 A1 damit, ein lagerstabiles Pellet für die Asphaltherstellung zu schaffen, welches aus
- einem Kern, zusammengesetzt aus 15-30 % gemahlenes Reifengummi und 70-85 % Straßenbaubitumen und
- einer Schale, die den Kern beschichtet, so dass das Pellet eine maximale Grüße von 1/16 bis 2 Inch aufweist, zusammengesetzt aus einem wasserbeständigen Polymer oder Wachs oder feinen Partikeln,
besteht.

Besagter Kern enthält weniger als 10 Gew. % Schwefel; die feinen Partikel sind Kalkhydrat (oder gemahlener Asphalt [Anspruch 4]) zu weniger als 40 Gew. % des ganzen Pellets.

Das Pellet kann zusätzlich Gesteinsmehl, zusätzliche bituminöse Bindemittel, nicht bituminöse Bindemittel, Strukturadditive, Farbstoffe, Salze, Viskositäts-Modifizierer enthalten.

Dabei werden Stoffe mit nicht Newtonschem Verhalten, z. B. wie Polysaccharide erwähnt. Daraus kann geschlossen werden, dass damit kein Viskositätssenker gemeint ist.

Das Verfahren zur Herstellung dieser Pellets umfasst die Beschaffung von gemahlenem Reifengummi und Straßenbaubitumen, das Reagieren-lassen von Gummi und Bitumen für mindesten 45 Minuten, die Kombination der Reaktionsmischung mit feinen Partikeln, um den Kern zu formen und die Beschichtung des Kerns mit einer Schale, um das Pellet zu formen. Das Verfahren zur Herstellung von Asphalt umfasst die Verflüssigung der Pellets durch Erwärmung und Kombination mit Mineralstoffen und optional die Zugabe von zusätzlichem Bitumen.

Als Material für die so gennannte Schale soll u.a. Erdölwachs, Sasol Wax und Sasobit zur Anwendung gelangen, und als Bestandteil des Bindemittels für den so gennannten Kern neben Bitumen und Gummi ebenfalls Sasol Wax eingesetzt werden, weil bekannterweise Sasol Wax dafür nützlich ist, die Temperaturen zur Herstellung und Ausbringung von Asphalt von ca. 325-300°F (162-150°C) auf 280-250°F (139-121°C) zu senken.
Das erwähnte Reagieren-lassen von Gummi und Bitumen soll in der Wärme z. B bei 350-380°F (ca. 175-195°C) erfolgen.

Aus der US 2010/0056669 A1 entnimmt der Fachmann, dass bereits eine
- Vorreaktion des Gummis (durch Vermischung mit heißem Bitumen) stattfinden kann und
- die Zugabe von Wachs zur Reduzierung der Temperaturen zur Herstellung und Anwendung von Asphalt sich bewährt hat.

Nach tiefergehender analytischer Untersuchung muss aber der Fachmann erkennen, dass es sich bei diesen so genannten Pellets nicht um ein Additiv zur Modifizierung von Asphalt zu Gummi-Asphalt handelt sondern um eine Art pelletiertes Bindemittel zur Herstellung von Asphalt, dass ausschließlich oder mit geringen zusätzlichen Anteilen Bitumen das Bindemittel des Asphaltes darstellt, woraus sich Nachteile ergeben. Asphaltmischanlagen sind hinsichtlich der Lager- Förder- und Dosiereinrichtungen nach aktuellen Stand der Technik nicht für die Verwendung eines festen, granulierten Bindemittels konstruiert.

Hieraus kann der Fachmann zwar die Lehre einer Bitumenverhärtung, jedoch nicht mit einer integrierten Quellung entnehmen.

Wenn im weiteren Ausblick auch noch die WO 2010/023173 A1 herangezogen wird, werden in der Zusammenschau der analysierten Quellen zum Stand der Technik keine Ansätze zur Lösung der nachstehenden Aufgabe gefunden.

Die letztgenannte Veröffentlichung offenbart eine Bitumenkomposition eines "Nassverfahrens". Nachteilig ist, dass es sich um ein Gummi-modifiziertes Fertigbindemittel handelt und der Anwender am Asphaltmischwerk einen zusätzlichen, in der Regel nicht verfügbaren Bindemitteltank für die Lagerung benötigt. Außerdem fehlt die Flexibilität für eine Einstellung, da nur ein Bindemittel mit definierter Gummikonzentration und definierter Härteklasse im Tank vorliegt. Nachteilig ist auch, dass für die Herstellung der Bitumenkomposition Zeit, Energie und eine Modifizierungsanlage erforderlich ist. Zudem wird nicht die Verhärtung des Bitumens durch den Entzug von öligen Bestandteilen des Bitumens durch die Quellung des Gummis verhindert. Die Viskosität der Bitumenkomposition liegt auf dem gleichen Niveau wie bei einem gewöhnlichen gummimodifizierten Bitumen und ist nicht reduziert.

### Darlegung des Wesens der Erfindung

Der Erfindung liegt die Aufgabe zu Grunde, ein Verfahren zur Herstellung eines Schüttgutes von Agglomeraten aus Gummipartikeln und Wachs, insbesondere in Form von Pellets, sowie eine neue Zusammensetzung des Agglomerats, insbesondere in einem Pellet, und die Verwendung dieses Schüttgutes für die Herstellung von Asphalt und den verbesserten Asphalt oder eines Mischgutes mit einer Bitumenmasse oder einer Bitumenmasse zu schaffen, wobei die Gummipartikel derart mit Wachs zusammengebracht werden, dass
- die Gummipartikel ohne gesundheits-/umweltschädigende Substanzen aktiviert und mit Wachs homogen benetzt werden,
- das Agglomerat wie die Pellets leicht und sicher gelagert, transportiert und mit den in Asphaltmischanlagen üblicherweise vorhandenen Anlagen für die Direktzugabe dosiert werden können,
- der hergestellte Asphalt solche funktional verschmolzenen Effekte aufweist, die seinen Widerstand bei Umgebungstemperatur gegen Verformung erhöhen sowie die aktivierten Gummipartikel und deren intensive Wechselwirkung mit dem Bitumen den Asphalt in seinen Eigenschaften verbessert und dem Bitumen im Asphalt ölige Bestanteile nicht entzogen werden und keine Verhärtung des Bitumens stattfindet und
- die im Agglomerat angelegten und erhaltenen vorteilhaften Wirkungen zu einer logistisch flexibleren Einarbeitung oder Verarbeitung des Asphalts oder eines Mischgutes mit einer Bitumenmasse oder einer Bitumenmasse .

Damit sind insbesondere die Nacheile zu beseitigen, wie sie sich z.B. aus der US 2010/0056669 A1 ergeben, dass dort
- eine Verringerung der Verhärtung des Bitumens durch Aufnahme von Bitumenbestandteilen bei der Quellung des Gummis nicht stattfindet,
- eine Quellung des Gummis durch zugesetztes Öl (aber implizit durch das zugesetzte Bitumen) nicht erfolgen kann,
- der Widerstand gegen Verformungen durch Wachs nicht verbessert wird,
- eine optionale Zugabe von Polyoctenamer zur Verbesserung der Kompatibilität von Gummi und Bitumen nicht erfolgt und
- nur ein geringer Anteil von maximal 30 % Gummi ermöglicht wird.

Im Rahmen der technologischen Kette, wie Herstellung des Agglomerats, Zusammensetzung des Agglomerats und Herstellung des verbesserten Asphalts sollen Vorteile für die Verarbeitung und zielsichere Verdichtung, Energieeinsparung, Emissionsreduzierung erreicht und Staubexplosionen vermieden sowie eine pneumatische oder mechanische Förderung (Schneckenförderung) realisiert werden, um insgesamt Aufwand, wie Zeit, Energie, Investitionen für Modifizierungsanlagen gegenüber bisheriger Bitumenmodifizierung einzusparen.

Diese komplexe Aufgabe wird durch die Merkmale der Ansprüche 1 bis 23 gelöst.

Das im Anspruch 1 angegebene Verfahren zur Herstellung eines Schüttgutes von Agglomeraten, die Gummipartikel und aus der Gruppe der Erdölparaffine, Fischer-Tropsch Paraffine, Amidwachse, Montanwachse, Polymerwachse, Ester des Glycerins ausgewählte Wachse mit Erstarrungspunkt über 50°C aufweisen, durch quellende Vorreaktion der Gummipartikel und einer Zugabe von Wachs umfasst die Verfahrensschritte
a) Aktivierung des Gummis durch Quellung bei minim. 83°C bis max. 120°C und Verwendung eines Quellmittels aus naphthenischen oder paraffinischen Mineralölen, recycelten Schmierölen, nativen Ölen oder bei 20-40°Cschmelzenden Paraffinen aus der Fischer-Tropsch Synthese unter Ausschluss von aromatenreichen Ölen,
b) Zugabe einer Schmelze aus auf Bitumen viskositätsreduzierend wirkendem, über 50°C schmelzendem Wachs, wobei durch den Anstieg der Stromaufnahme (Gradientenmessung) des Mischers bei ca. 85°C das Schmelzen des Wachses erkannt und der Mischvorgang beendet wird, und optionalem Polyoctenamer zu den durch Quellung aktivierten Gummipartikeln,
c) Agglomeration der durch Quellung aktivierten Gummipartikel mit dem viskositätsreduzierenden Wachs und optionalen adhäsionsverbessernden Stoffen wie Harzen oder Polyisobutenen durch mischende Vermengung oder Einwirkung von Druck derart, dass das Quellungsmittel in die Zwischenräume der Gummimoleküle eindringt und die Moleküle auseinander drängt und die physikalischen Anziehungskräfte verringert oder unterbrochen werden, wobei
d) im Agglomerat durch das zu einer Viskositätsminderung führende größere Volumen und die Erweichung eine innigere und homogenere Benetzung mit dem Wachs sowie eine erhöhte Stabilität der Vernetzung der Gummimoleküle untereinander hergestellt wird und innerhalb von 7 min 50 sec hergestellt werden kann.

Der überraschend und erfinderisch verschmelzende Effekt im Agglomerat wird durch das zu einer Viskositätsminderung führende größere Volumen bestimmt, wobei die Erweichung eine innigere und homogenere Benetzung mit dem Wachs sowie eine erhöhte Stabilität der Vernetzung der Gummimoleküle untereinander herstellt. Dieser Effekt schafft die Grundlage oder das Potential für die vorteilhaften Wirkungen im herzustellenden Asphalt, eines Mischgutes mit einer Bitumenmasse oder einer Bitumenmasse.

Verfahrensgerecht wird faktisch durch die Zugabe von Wachs eine Schicht auf den durch Quellung aktivierten Gummiartikeln gebildet.

Das Verfahren wird durch die Zugabe von 1 - 50 Gew. %, vorzugsweise mit 25 - 35 Gew. % der Schmelze aus Wachs bezogen auf den Gummianteil weiter ausgebildet.

Auch ein Zusatz von Polyoctenamer mit einem Anteil in der Wachsschmelze von 1 - 50 Gew. %, vorzugsweise mit einem Anteil in der Wachsschmelze von 25 - 35 Gew. % ist vorteilhaft.

Des Weiteren ist es zweckmäßig, eine zusätzliche Zugabe von 0,1 - 5 Gew. % adhäsionsverbessernden Stoffen, wie. z. B. Harzen oder Polyisobutenen zur Intensivierung der Agglomeration vorzunehmen.

Die Zugabe der Wachsschmelze sollte innerhalb von ca. 2 - 3 min zu den durch Quellung zu aktivierenden Gummipartikeln erfolgen.

Eine mischende Vermengung insbesondere zu einem Pellet kann durch
- einen beheizten mechanischen Mischer,
- Pressverfahren mit Kollergang und formgebender Matrize,
- Extrudierverfahren oder
- einen wärmeerzeugenden Mischer als Friktionsmischer, Fluidmischer oder Turbomischer
erfolgen.

Die Zugabe von Wachs zu den Gummipartikeln und die Ausbildung von Agglomeraten sind in zwei aufeinander folgenden Prozessschritten möglich.

Das nach dem Verfahren hergestellte Agglomerat wird bei der Herstellung von Asphalten oder Bitumenmassen durch direkte Zugabe in einer Mischanlage für Asphaltmischgüter oder Bitumenmassen, insbesondere in Form eines Pellets, aus Gummipartikeln und Wachs, eingesetzt und weist auf:
- Gummipartikel mit einer Korngrößenverteilung zwischen 0,05 und 5 mm,
- eine in und auf die Gummipartikel eingebrachte Schmelze aus Wachs mit einem Anteil von 1 - 50 Gew. % bezogen auf den Gummianteil und
- ein aufgenommenes Quellmittel in den Gummipartikeln im Bereich von 1 % bis 100% der maximal aufnehmbaren Menge des Quellmittels.

Das Agglomerat wird vorteilhaft als Schüttgut mit trockener Oberfläche innerhalb von 15 min durch vermischende oder agglomerierende Verfahren hergestellt.

Zur Herstellung von Asphalt wird ein Schüttgut durch deren Vermischung mit heißem Bitumen verwendet, wobei zur Reduzierung der Temperaturen bei der Herstellung und Anwendung des Asphalts die Agglomerate direkt mit einem Anteil von 1 - 30 Gew. %, vorzugsweise mit einem Anteil von 5 - 20 Gew. %.bezogen auf den Anteil von Bitumen vor, während oder nach der Zugabe des Bitumens in den Asphaltmischer zugegeben werden.

Die technologische Nutzung wird durch ein Verfahren komplettiert, bei dem
a) die Zugabe von 3 bis 15 Sekunden vor der Zugabe des Bitumens erfolgt,
b) innerhalb dieses Zeitraums durch die höhere Temperatur und die starken Scherkräfte ein rasches Aufschließen der Agglomerate, eine Vorverteilung der Gummipartikel sowie eine thermische Aktivierung des Gummis durchgeführt wird,
c) im Mischprozess des Asphalts die Wärme das Wachs verflüssigt wird, wodurch die aktivierten Gummipartikel rasch freigegeben werden,
d) die durch Vorquellung aktivierten Gummipartikel eine intensive Wechselwirkung wie Umhüllung mit dem Bitumen herstellen und/oder,
e) die Mischtemperatur in der Dimension von 130 bis 190°C liegt.

Bei einem Asphaltmischgut oder ein Mischgut mit Bitumenmasse wird das Verfahren durch
f) eine Einbringungstemperatur von 120 bis 230°C,
g) einen Verdichtungsgrad in den Dimensionen von 98 bis 103 %,
h) eine Spaltzugfestigkeit in den Dimensionen von 1,70 bis 3,00 N/mm²,
i) eine Spaltzugfestigkeit nach Wasserlagerung in den Dimensionen von 1,5 bis 2,5 N/mm² und
j) eine Widerstandfähigkeit gegen Verformungen, gemessen als Dehnungsrate im einaxialen Druckschwellversuch in den Dimensionen von 0,6 bis 0,9 * 10⁻⁴/n ‰
vervollkommnet.

Das Verfahren zur Herstellung von Asphalt oder eines Mischgutes mit einer Bitumenmasse oder einer Bitumenmasse unter Verwendung eines Schüttgutes aus den hergestellten Agglomeraten wird so bestimmt, dass während der Vermischung das Quellungsmittel in die Zwischenräume der Gummimoleküle eindringt, die Moleküle auseinander gedrängt und die physikalischen Anziehungskräfte verringert oder unterbrochen werden, wobei eine bis zu 180 min in dem Mischgut stabil bleibende Viskositätsminderung hergestellt und bei der über diese Zeit wirkenden Viskositätsminderung eine erhöhte Stabilität der Vernetzung der Gummimoleküle untereinander nach Einarbeitung der Agglomerate und eine bis zu 180 min andauernde Stabilität einer solchen Zubereitung erhalten wird.

Somit kann das Asphaltmischgut oder Mischgut mit Bitumenmasse oder Bitumenmasse eine sowohl durch das Quellmittel als auch durch das Wachs zusammenwirkende Senkung der Viskosität der Bitumenmasse gegenüber ihrer Ausgangsviskosität bei einer bis zu < 180 min in dem Mischgut andauernden Stabilität der Viskositätsminderung und erhöhten Stabilität der Vernetzung der Gummimoleküle sowie Stabilität aufweisen.

Es können auch derartige Bitumenmassen mit Agglomeraten für eine Oberflächenbehandlung von Verkehrswegen durch Versprühen der Bitumenmassen und Aufbringung von Mineralstoffen verwendet werden.

Die Gummipartikel können aus der Aufbereitung von Altreifen (PKW, LKW; oder Teile von Reifen) bei Normaltemperatur gewonnen werden, da in der Kälte hergestellte Gummipartikel unvorteilhaft niedrige Oberfläche/Volumen-Verhältnisse aufweisen.

Die Gummipartikel können demnach mit 5-100 Gew. %, bevorzugt 10-40 Gew. % bezogen auf die Gummimasse mit naphthenischen Mineralölen, paraffinischen Mineralölen, recycelten Schmierölen, nativen Ölen, Fettsäuren oder bei 20-40°C schmelzenden Paraffinen aus der Fischer-Tropsch Synthese quellen sowie anschließend, bezogen auf den Gummianteil, mit 1 - 50 Gew. %, bevorzugt 10 - 30 Gew. % einer Schmelze aus Wachs einschließlich eines optionalen Zusatzes von Polyoctenamer versehen und agglomeriert werden.

Der Anteil des optionalen Polyoctenamers in der Wachsschmelze beträgt 1 - 50 Gew. %, bevorzugt 25 - 35 Gew. %. Dabei dient die Wachsschmelze als Bindemittel für die Gummipartikel.

Optional kann die Agglomeration durch die Zugabe von 0,1-5 Gew. % adhäsionsverbessernder Stoffe, wie Harze oder Polyisobutene intensiviert werden.
Als Wachse sind alle über 50°C schmelzende Wachse, wie z.B. Erdölparaffine, Fischer-Tropsch Paraffine, Amidwachse, Montanwachse, Polymerwachse oder Ester des Glycerins verwendbar.

Als naphthenische Mineralöle sind z.B. alle in der Gummiindustrie verwendeten oder bei anderen Anwendungen gebräuchlichen naphthenischen Öle geeignet, die durch Vakuumdestillation aus geeigneten Erdölen und ohne oder mit anschließender Raffination hergestellt werden.

Als paraffinische Mineralöle können alle durch Vakuumdestillation aus geeigneten Erdölen gewonnenen, raffinierten oder nicht raffinierten paraffinischen Siedeschnitte verwendet werden.

Ebenfalls gut geeignet sind Mineralöle, die durch das Recycling von gebrauchten Schmierölen erzeugt werden.

Als native Öle sind alle natürlichen, recycelten oder chemisch veränderten, z.B. raffinierten oder umgeesterten Ester des Glycerins mit Fettsäuren geeignet.

Die bei 20-40°C schmelzenden Paraffine zeichnen sich durch einen mittels Gaschromatographie gemessenen Anteil linearer Alkane zwischen 60 und 90 % sowie eine Dichte 700-800 kg/m³ bei 70°C aus und werden durch Destillation aus dem Rohprodukt der Fischer-Tropsch Synthese gewonnen.

Als adhäsionsverbessernde Harze können, unter anderen, synthetische aliphatische, aromatische oder teilaromatische Kohlenwasserstoffharze oder aus Baumharzen (Kolophonium) abgeleitete Harzester und Polyterpene verwendet werden.

Insgesamt bewirkt die Erfindung den Effekt, dass das Quellungsmittel in die Zwischenräume der Gummimoleküle eindringt und die Moleküle auseinander drängt, die chemischen Verknüpfungspunkte zwischen den Polymerketten jedoch bestehen bleiben. Somit werden die physikalischen Anziehungskräfte verringert oder unterbrochen. Das resultierende größere Volumen und die Erweichung fuhren zu einer innigeren und homogeneren Benetzung mit dem Wachs.

Nach dem Schmelzen des Wachses im Asphaltmischer kann das Bitumen intensiver mit der aufgequollenen Struktur der Gummimoleküle in Kontakt treten, ohne dass größere Mengen ölige Bestandteile des Bitumens für die Quellung erforderlich sind. Somit wird eine Veränderung oder Verhärtung des Bitumens durch Entzug der öligen Bestandteile verringert. Das geschmolzene Wachs verringert die Viskosität des Bitumens im heißen Asphaltmischgut und erlaubt dadurch eine zielgenaue Verdichtung des Asphaltes und Absenkungen der Temperaturen für Herstellung und Einbau des Asphaltes. Nach dem Abkühlen des Asphaltes erstarrt das Wachs und verbessert so durch seine Härte den Widerstand des Asphaltes gegen Verformungen. Das optionale Polyoctenamer bildet bei der Asphaltherstellung Bindungen aus, die die Kompatibilität von Gummi und Bitumen erhöhen.

Im Unterschied zu feinen Gummipartikeln können die erfindungsgemäß erzeugten Agglomerate problemlos mit den in Asphaltmischanlagen vorhandenen Dosiertechniken gefördert werden, wie z. B. durch Schneckenförderer oder pneumatische Förderer, die auch für Faserstoffpellets verwendet werden. Der Umgang mit staubfreien Agglomeraten verringert somit auch das Risiko von Staubexplosionen.

Die Agglomerate werden bei der Asphaltherstellung, bezogen auf die Bitumenmasse in einem Anteil von 1 - 30 Gew. %, bevorzugt 5 - 20 Gew. % direkt in den Asphaltmischer dosiert.

Die Zugabe der Agglomerate zu den heißen Mineralstoffen kann vor, während oder nach der Zugabe des Bitumens erfolgen.

Bevorzugt ist die Zugabe einige Sekunden vor dem Bitumen, da die zu diesem Zeitpunkt höhere Temperatur und die starken Scherkräfte zu einem raschen Aufschließen der Agglomerate, einer Vorverteilung der Gummipartikel sowie einer thermischen Aktivierung des Gummis führt.

Im Asphaltmischprozess verflüssigt die Wärme das Wachs sowie die optionalen adhäsionsverbessernden Stoffe und gibt die aktivierten Gummipartikel rasch frei. Die Aktivierung durch Vorquellung bewirkt eine raschere und intensivere Wechselwirkung mit Bitumen, so dass bessere Asphalteigenschaften erreicht werden als bei der bisherigen Zugabe von Gummipartikeln im Trockenmischverfahren.

Mit dem optionalen Polyoctenamer als ein reaktives Polymer wird die Kompatibilität von Gummi und Bitumen durch die Ausbildung von chemischen Bindungen verbessert. Das geschmolzene Wachs senkt die durch das Gummi erhöhte Viskosität der Asphaltmischung, so dass eine bessere Verarbeitbarkeit bei der Herstellung von Asphaltschichten mit Asphaltfertigern erreicht und bei der Verdichtung durch Walzen zuverlässig der erforderliche Verdichtungsgrad erreicht wird.

Im Unterschied zu den bei Umgebungstemperatur flüssigen Viskositätsreduzierern hat das hier verwendete Wachs bei Umgebungstemperatur keine erweichende, sondern eine festigkeitserhöhende Wirkung.

Die Viskositätssenkung ermöglicht eine Senkung der bei der Verwendung von Gummipartikeln üblicherweise erforderlichen hohen Temperaturen für die Herstellung des Asphaltmischgutes und der Asphaltschicht. Dadurch wird Heizenergie eingespart und die Verringerung der Emissionen von CO₂ und Bitumendämpfen und Aerosolen schont die Umwelt und verbessert die Arbeitssicherheit.

Ein zusätzlicher positiver Effekt für die Umwelt ist die hochwertige Wiederverwendung von Altreifen im Sinne des Kreislaufwirtschafts- und Abfallgesetzes. Bisher wird ein großer Teil der anfallenden Altreifen mit niedrigerer Wertigkeit energetisch verwertet.

Außerdem werden Polymere zur Herstellung polymermodifizierter Bindemittel eingespart, da diese durch den erfindungsgemäßen Gummiasphalt ersetzt werden.

Die Verwendung von nativen Ölen oder recycelten Schmierölen als Quellungsmittel schont zudem die begrenzten Erdölressourcen.

Die Erfindung bringt von der Herstellung des Agglomerats aus aktiviertem Gummi und Wachs bis hin zur Verwendung für Asphalte oder Bitumenmassen oder weitere Anwendungen technologisch überraschende und vorteilhafte Wirkungen hervor, die erst durch folgende komplexe Überlegungen mit folgenden Ergebnissen herausgefunden werden konnten:
1. Die Zusammensetzung von Bitumen wird allgemein mit einem kolloidchemischen Modell beschrieben. Demnach besteht es aus submikroskopisch kleinen festen Partikeln (Kolloiden), den so genannten Asphaltenen, und einer umgebenden flüssigen (Ölartigen) Phase eines Dispersionsmitels, den so genannten Maltenen. Dieses System ist dauerhaft stabil, da die Maltene die Asphaltene stabilisieren. Die mechanischen Eigenschaften des Bitumens werden durch folgende Faktoren bestimmt:
   - Anteil der Asphaltenphase
   - Viskosität der Maltenphase

   Der Volumenanteil der Asphaltenphase steigt mit fallender Temperatur an. D. h., bei niedrigen Temperaturen wechseln Moleküle aus der Maltenphase in die Asphaltenphase. Bei steigenden Temperaturen wechseln Moleküle aus der Asphaltenin die Maltenphase zurück.
   Dieses Modell erklärt die zunehmende Härte und Steifigkeit von Bitumen bei tiefen Temperaturen durch das Anwachsen der festen Asphaltenphase.
   Durch Quellung von Gummipartikeln in Bitumen werden dem Bitumen ölige Bestandteile (Maltene) entzogen und im Gummi fixiert. Die Gummipartikel nehmen dabei an Volumen zu (bis zum Doppelten) und werden weicher. Der Effekt auf das Bitumen ist ähnlich wie bei der Abkühlung: Der Anteil der festen Asphaltenphase steigt und das Bitumen verhärtet.
   Je vollständiger die Quellung des Gummis bereits durch den Zusatz von Quellmitteln vorweggenommen wird, umso geringer ist die Aufnahme von Bestandteilen des Bitumens und umso weniger werden die Eigenschaften des Bitumens geändert. Die Flexibilität und somit die günstigen Tieftemperatureigenschaften des Bitumens bleiben weitgehend erhalten.
2. Die erreichte quasi "Blockadewirkung" des Öls im Gummi konnte dadurch aufgedeckt werden, dass gemäß der Erfindung das Gummigranulat mit einem Quellmittel vorgequollen wird. Diese Quellung nimmt einen Prozess vorweg, der bei der nach dem Stand der Technik verwendeten Methode im Nassverfahren abläuft. Erfindungsgemäß wird hier das Gummigranulat in heißes, oft noch besonders erhitztes, Bitumen eingearbeitet. Während einer sogenannten "Reifezeit" migrieren niedermolekulare Bestandteile aus dem Heißbitumen in das Gummigranulat und quellen dieses Granulat, d.h. Teile der Ölphase (Maltene) des Bitumens migrieren in das Gummi. Ein maltenarmes Bitumen ist weniger flexibel und somit brüchig und weniger kältestabil.

Das erfindungsgemäße Vorquellen führt nun dazu, dass im Vorwege der Asphaltherstellung schon die Aufnahmekapazität des Gummis verringert ist. Somit wird mindestens teilweise der Entzug der Öle aus dem Bitumen während der Heißphase beim Mischen und Transportieren reduziert und dafür gesorgt, dass in der dann entstehenden Mischung das Bitumen seine ursprünglichen Charakteristika behält.

Somit ist davon auszugehen, dass dadurch zielgenauer härtere Bitumensorten im Zusammenhang mit Gummimodifizierung eingesetzt werden können weil man einen "Vorhalteeffekt" für den Entzug der Öle im Nassverfahren besser steuern und beherrschen kann.

Das Quellmittel kann erfindungsgemäß als Stellgröße für die Bitumeneigenschaften wirken oder sogar wie folgt verwendet werden:
Je nach erhältlichem Bitumen und/oder der Qualität von in der Asphaltformulierung eingesetztem Ausbauasphalt kann man über diese Stellgröße die Qualität des in einer Asphaltmischung enthaltenen resultierenden Bitumenanteiles beeinflussen und steuern.

Eine technologische Abschlussstufe der Erfindung ist die Zugabe des erfindungsgemäß hergestellten Agglomerates in einer Mischanlage für Asphalt, aber die Erfindung ist auch in Sonderbindemitteln einsetzbar. Das Agglomerat bewirkt überaus positive Effekte, wenn es an Stelle von unbehandeltem Gummimehl doch im Nassverfahren eingesetzt wird. Sowohl Quellmittel als auch Wachsanteile wirken viskositätsverbessernd. Dieser Effekt kann dazu benutzt werden, die Produktionseffizienz in diesem Verfahren zu steigern, indem entweder der Durchsatz erhöht oder der Energieeinsatz signifikant reduziert wird.

Weiterhin ergeben sich auch Vorteile in Anwendungen, wo ein gummimodifiziertes Bitumen in Oberflächenbehandlungen für Verkehrswege eingesetzt wird. Hier wird dieses Bitumen mittels Heissversprühung auf eine Oberfläche gebracht. In einem folgenden Arbeitsgang werden dann Aggregate auf die heiße Oberfläche verteilt und angewalzt.
Für den Sprühprozess erweist sich wiederum die verbesserte Viskosität als vorteilhaft.
Ebenso wird aus der oben erwähnten zielgenaueren Möglichkeit der Bitumenformulierung eine erhebliche Prozessverbesserung abgeleitet.

Die in der Asphaltmatrix eingearbeiteten gequollenen Gummipartikel bleiben in ihrer Wirkungsweise im erkalteten Asphalt hochelastisch. Da auch im Langzeitliegeverhalten nicht davon auszugehen ist, dass sich nennenswerte Maltenphasen in das Gummi absetzen, kann das verbesserte elastische Verhalten bei tiefen Temperaturen dazu genutzt werden, härtere Bindemittel für die Asphaltproduktion einzusetzen. Hierdurch ist es möglich, deutlich standfestere Asphaltrezepturen zu entwickeln. Eine wirtschaftliche Herstellung von Asphaltmischgut ist z.Z. nur dann gegeben, wenn die Wiederverwendung von Ausbauasphalt umgesetzt wird. Da ausgebaute Asphalte i.d.R. keine elastomermodifizierten Bindemittel aufweisen, ist es erforderlich, bei der Zugabe von Frischbitumen einen Ausgleich sicherzustellen. Hierfür wurden bei polymermodifizierten Bitumen sogenannte RC (Recycling) Varianten entwickelt, die für die Wiederverwendung von bis zu 20 M % Ausbauasphalt geeignet sind. Will man höhere Ausbauasphaltanteile einsetzen, muss ein anderes Bindemittel gewählt werden, bei dem höhere Polymeranteile eingearbeitet worden sind. In der Regel sind pro Sorte nur zwei Varianten erhältlich, nämlich bis 20 % RC-Zusatz und bis 50% Ausbauasphaltzugabe. Werden nun beispielsweise 30 % RC eingesetzt, muss zwangsläufig die Variante bis 50 % gewählt werden. Dieses verursacht zusätzliche Kosten, da höher modifizierte Bitumensorten teurer sind. Über 50 % RC Zusatz sind geeignete Bindemittel bislang nicht verfügbar. Zukünftig werden durch neue Aufbereitungstechniken aber gerade hier besonders hohe Wirtschaftlichkeiten ermöglicht.

Mit der technologischen Umsetzung der Erfindung wird es an jeder Mischanlage möglich, den erforderlichen Gummianteil exakt auf den jeweiligen Produktionsprozeß abzustimmen, d.h. jede Mischung erhält - wie schon zuvor mit dem Einstellungseffekt dargestellt - die exakte Modifizierungsmenge an Gummigranulat. Zusätzlich werden Tankraum und Energie an einer jeglichen Mischanlage eingespart.

Hervorzuheben sind die Eigenschaften am fertigen Mischgut, da die bisher erprobten Asphaltmischgutsorten hochwertige Rezepturen für Container-Terminals und und Verkehrswege mit starker Beanspruchung erforderten. So zeichnen sich beispielsweise Splittmastixasphalte (SMA) durch sehr gute Standfestigkeit und hohe Verschleißfestigkeit aus. I.d.R. werden hierfür polymermodifizierte Bindemittel eingesetzt. Die Ergebnisse in Auswertung des Standes der Technik haben aufgezeigt, dass es beim herkömmlichen Gebrauchsverhalten keine signifikanten Unterschiede zwischen gummimodifizierten und polymermodifizierten Mischgutsorten gibt. Im Standfestigkeitsverhalten, gemessen am Spurbildungstest, sind durch die Verwendung des erfindungsgemäßen Agglomerats deutliche Vorteile aus dem Spurbildungstest erkennbar.

Die Herstellung des Agglomerats kann also für die Praxis im Wesentlichen die folgenden Schritte umfassen:
Schritt 1: Die Gewinnung einer Siebfraktion von Gummipartikeln mit einer Korngrößenverteilung zwischen 0,05 und 5 mm, bevorzugt 0,2 - 1,2 mm, die bei Umgebungstemperatur durch mechanische Verfahren aus Altreifen gewonnen werden, wobei Fremdstoffe und Stahl- sowie Gewebefasern durch magnetische und mechanische Verfahren abgetrennt sind.
Schritt 2: Die Aktivierung des Gummis durch Quellung mit dafür geeigneten Flüssigkeiten, wie an Stelle der Verwendung von aromatenreichen Ölen nun die in der Gummiindustrie eingeführten naphthenischen Öle, wobei hier überraschend festgestellt wurde, dass auch native Öle, z.B. Pflanzenöl, paraffinische Öle, recycelte Schmieröle und bei ca. 20-40°C schmelzende Paraffine, die als Siedeschnitt des Produktstroms der Fischer-Tropsch-Synthese gewonnen werden, für die Quellung geeignet sind.
   Eine bevorzugte Ausführung der Quellung ist die Zugabe von weniger als der maximal aufnehmbaren Menge an Quellungsmittel unter mechanischer Durchmischung. Die Durchmischung stellt die homogene Verteilung des Quellmittels sicher.
Schritt 3: Durch die Zugabe von Wachs erfolgt faktisch eine Art von Beschichtung der durch Quellung aktivierten Gummipartikel mit viskositätsreduzierendem Wachsadditiv, optionalem Polyoctenamer und optionalen adhäsionsverbessernden Stoffen und somit eine Herstellung von Agglomeraten aus diesen Komponenten, wodurch die erfindungsgemäße, gleichmäßige Verteilung des viskositätssenkenden Wachses auf dem Gummi eintritt. Dazu sind alle kontinuierlich oder chargenweise arbeitenden Verfahren geeignet, die eine wachs-/polyoctenameradhäsionsverbesserte Schmelze mit den vorgewärmten Gummipartikeln vermischen. Besonders geeignet sind z.B. Mischer, die durch rotierende Einbauten oder Mischarme die Gummipartikel aufwirbeln und durch den wiederholten Kontakt der verwirbelten Partikel eine gleichmäßige Verteilung des Wachses erreichen. Alternativ kann das Wachs und optional das Polyoctenamer und optional die Adhäsionsverbesserer auch in fester Form Mischern mit Prozesswärmeführung zugeführt werden. Eine bevorzugte Ausführung ist die Anwendung von Friktionsmischern, wie Fluid- oder Turbomischer. Solche Mischer entwickeln durch Reibungs- und Scherkräfte die erforderlichen Wärme. Nach Vorlegen der Gummipartikel und Beginn des Mischens können das Quellmittel, das Wachs, das optionale Polyoctenamer sowie optionale adhäsionsverbessernde Stoffe in beliebiger Reihenfolge oder gleichzeitig zugegeben werden. Die Zugabe der Komponenten, das homogene Vermischen und das Schmelzen des Wachses können in einem Arbeitsgang erfolgen. Das optionale Polyoctenamer verbessert die Kompatibilität von Gummi und Bitumen durch chemische Vernetzung.
   Besonders geeignet für die Beschichtung der Gummipartikel sind auch alle Verfahren, die zusätzlich zu der Verteilung der Wachsschmelze gleichzeitig die Partikel zu größeren Aggregaten von 1 - 40 mm Durchmesser agglomerieren. Dabei dient die Wachs- Polyoctenamerschmelze als Bindemittel für die Gummipartikel. Der optionale Zusatz adhäsionsverbessernder Stoffe kann die Agglomeration intensivieren. Dies können u. a. folgende, in der Kunststoffverarbeitung und anderen Bereichen gebräuchliche Verfahren sein:
   ▪ Pressverfahren mit Kollergang und formgebender Matrize,
   ▪ Extrudierverfahren.

   Alternativer Schritt: Die separate Herstellung von Agglomeraten. Die erfindungsgemäße Zugabe von Wachs zu den Gummipartikeln und die Ausbildung von Agglomeraten kann auch mit den zuvor aufgeführten Verfahrensschritten in zwei aufeinander folgenden Prozessschritten erfolgen, wobei auch hier das optionale Polyoctenamer die Kompatibilität von Gummi und Bitumen durch chemische Vernetzung verbessert.

Die Zusammensetzung des Agglomerats ist geprägt durch
- Gummipartikel mit einem Durchmesser von 0,05 - 5 mm
- Quellung bei Raumtemperatur oder erhöhter Temperatur oberhalb des Schmelzpunktes des Quellmittels, aufgenommenes naphthenisches Öl oder paraffinisches Öl oder recyceltes Schmieröl oder natives Öl oder bei 20-40°C schmelzendes Fischer-Tropsch Paraffin. Der Anteil des Quellmittels kann bis zur gleichen Masse der Gummipartikel betragen
- einen Anteil von 1-50 Gew. %, bezogen auf die Gummipartikel, eines Waches mit Erstarrungspunkt über 50°C
- einen Anteil von 0,1-10 Gew. %, bezogen auf die Gummipartikel, des Polyoctenamer-Polymerwachses (Vestenamer^{®})
- einen Anteil von 0,1-5 % adhäsionsverbessernder Stoffe, z. B. Harze oder Polyisobutene

Die Verwendung bei der Herstellung des Asphalts und der eingebaute Asphalt mit den Merkmalen, dass
- die Agglomerate bei der Asphaltherstellung in einem Anteil von 1 - 30 Gew. %, bevorzugt 5 - 20 Gew. % bezogen auf die Bitumenmasse direkt in bekannte Asphaltmischer dosiert werden,
- die Zugabe der Agglomerate zu den heißen Mineralstoffen vor, während oder nach der Zugabe des Bitumens erfolgt, wobei sich bewährt hat, wenn die Zugabe einige Sekunden vor dem Bitumen erfolgt, da die zu diesem Zeitpunkt höhere Temperatur und die starken Scherkräfte im Asphaltmischer zu einem raschen Aufschließen der Agglomerate, einer Vorverteilung der Gummipartikel sowie einer thermischen Aktivierung des Gummis führt,
- im Asphaltmischprozess die Wärme dann instantan das Wachs verflüssigt und die aktivierten Gummipartikel rasch frei gibt, wobei die Aktivierung durch Vorquellung eine beschleunigte und intensivere Wechselwirkung mit Bitumen bewirkt, so dass bessere Asphalteigenschaften gegenüber einer Trockenzugabe von Gummipartikeln erzielt werden.
- die gequollenen Pellets eine zusätzliche Wachskomponente einbringen, die viskositätsreduzierend wirkt, Vorteile für Verarbeitung, zielsichere Verdichtung, Energieeinsparung und Emissionsreduzierung bringt und bei Umgebungstemperatur den Widerstand des Asphalts gegen Verformung erhöhen,
- die durch Quellung aktivierten Gummipartikel und durch intensive Wechselwirkung mit dem Bitumen die Asphalteigenschaften verbessern,
- die Quellung vor der Agglomeration verhindert, dass bei Quellung des Gummis dem Bitumen im Asphalt ölige Bestandteile entzogen werden und somit einer Verhärtung des Bitumens entgegen gewirkt wird,
verbessern die Eigenschaften im Asphalt hinsichtlich der erreichbaren Werte quantitativ und qualitativ.

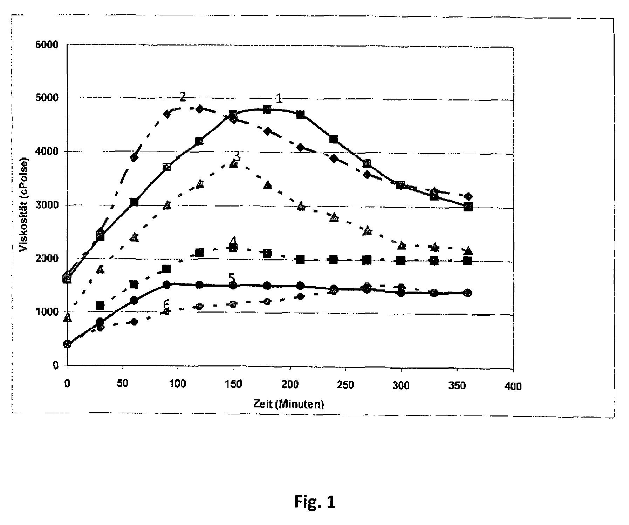

Die Erfindung wird im Folgenden mit Ausführungsbeispielen zunächst an Hand von Tabellen und danach nach den in den Figuren 1 bis 3 dokumentierten Versuchen erläutert.

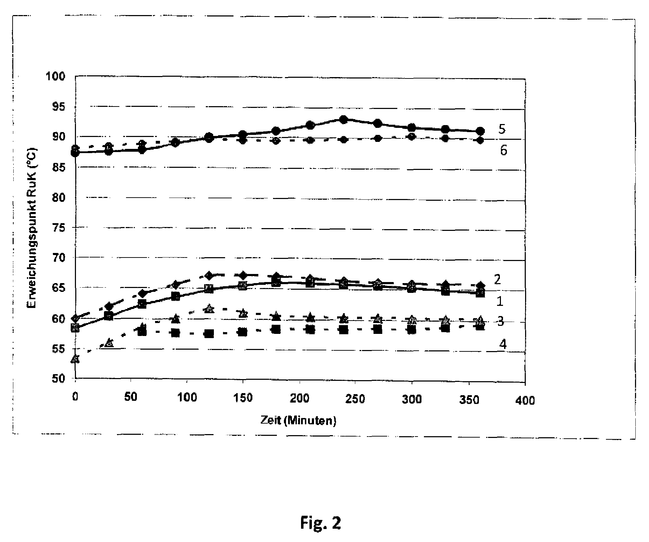

In den Figuren zeigen
**Fig.1**
   eine grafische Darstellung der Viskosität der modifizierten Bitumen im zeitlichen Verlauf des Modifizierungsprozesses mit den Varianten
   1) 20 Gew. % Gummipartikel, 2 Gew. % aromatisches Öl
   2) 19,1 Gew. % Gummipartikel, 0,9 Gew. % Polyoctenamer (Vestenamer®), 2 Gew. % aromatisches Öl
   3) 22 Gew. % aktiviertes Schüttgut aus 9/10 Gummipartikeln und 1/10 niedrigschmelzendes Paraffin aus der Fischer-Tropsch Synthese
   4) 22 Gew. % aktiviertes Schüttgut aus 9/10 Gummipartikeln und 1/10 Mineralöl
   5) 22 Gew. % aktiviertes Schüttgut aus 4/6 Gummipartikeln, 1/6 Mineralöl und 1/6 FT Wachs mit Erstarrungspunkt 102°C (Sasobit®)
   6) 22 Gew. % aktiviertes Schüttgut aus 4/6 Gummipartikeln, 1/6 niedrigschmelzendes Paraffin aus der FT Synthese und 1/6 FT Wachs (Sasobit®);
**Fig. 2**
   eine Darstellung des Erweichungspunktes nach Ring und Kugel (gemessen gemäß DIN EN 1427) von Reifengummi-modifizierten Bitumen im zeitlichen Verlauf der Herstellung durch Rühren bei 180°C; 78 Gew. % Grundbitumen B 80/100 mit den Varianten gemäß Fig. 1, wie
   1) 20 Gew. % Gummipartikel, 2 Gew. % aromatisches Öl
   2) 19,1 Gew. % Gummipartikel, 0,9 Gew. % Polyoctenamer (Vestenamer®), 2 Gew. % aromatisches Öl
   3) 22 Gew. % aktiviertes Schüttgut aus 9/10 Gummipartikeln und 1/10 niedrig schmelzendes Paraffin aus der Fischer-Tropsch Synthese
   4) 22 Gew. % aktiviertes Schüttgut aus 9/10 Gummipartikeln und 1/10 Mineralöl
   5) 22 Gew. % aktiviertes Schüttgut aus 4/6 Gummipartikeln, 1/6 Mineralöl und 1/6 FT Wachs mit Erstarrungspunkt 102°C (Sasobit®)
   6) 22 Gew. % aktiviertes Schüttgut aus 4/6 Gummipartikeln, 1/6 niedrigschmelzendes Paraffin aus der FT Synthese und 1/6 FT Wachs (Sasobit®);
**Fig. 3**
   die Darstellung des Fließens (gemessen SABITA BR 4 T, TG1 MB 12) von Reifengummi-modifizierten Bitumen im zeitlichen Verlauf der Herstellung durch Rühren bei 180°C; 78 Gew. % Grundbitumen B 80/100 mit den Varianten gemäß Fig. 1 und Fig. 2, wie
   1) 20 Gew. % Gummipartikel, 2 Gew. % aromatisches Öl
   2) 19,1 Gew. % Gummipartikel, 0,9 Gew. % Polyoctenamer (Vestenamer®), 2 Gew. % aromatisches Öl
   3) 22 Gew. % aktiviertes Schüttgut aus 9/10 Gummipartikeln und 1/10 niedrig schmelzendes Paraffin aus der Fischer-Tropsch Synthese
   4) 22 Gew. % aktiviertes Schüttgut aus 9/10 Gummipartikeln und 1/10 Mineralöl
   5) 22 Gew. % aktiviertes Schüttgut aus 4/6 Gummipartikeln, 1/6 Mineralöl und 1/6 FT Wachs mit Erstarrungspunkt 102°C (Sasobit®)
      22 Gew. % aktiviertes Schüttgut aus 4/6 Gummipartikeln, 1/6 niedrigschmelzendes Paraffin aus der FT Synthese und 1/6 FT Wachs (Sasobit®).

### Bester Weg zur Ausführung der Erfindung

Die folgende Tabelle 1 dokumentiert zunächst die Herstellung eines erfindungsgemäßen Agglomerats, wobei ein leicht agglomeriertes Produkt aus 66,6 Gew. % Gummipartikeln (0,2-0,8 mm Durchmesser), 16,7 Gew. % verschiedenen Quellmitteln und 16,7 Gew. % Fischer-Tropsch Paraffinwachs mit einem Erstarrungspunkt von 102°C in einem Fluidmischer FM10 bei einer Umdrehungszahl von 3600 (U/min) hergestellt wird:

**Tabelle 1**

| Produkt | Quellmittel | Reihenfolge der Zugabe | Mischzeit [Minuten] | Maximale Mischtemperatur [°C] | Produktqualität |
|---|---|---|---|---|---|
| 1 | FT Paraffin* | Quellmittel, F T Wachs** | 7:50 | 83 | Rieselfähig, homogen# |
| 2 | FT Paraffin | Quellmittel, FT Wachs | 5:00 | 120 | Rieselfähig, homogen |
| 3 | Pflanzenöl^{#} | Quellmittel, F T Wachs | 4:40 | 86 | Rieselfähig, homogen |
| 4 | Recyceltes Schmieröl | Quellmittel, F T Wachs | 5:05 | 86 | Rieselfähig, homogen |
| 5 | Recyceltes Schmieröl | FT Wachs, Quellmittel | 3:45 | 86 | Rieselfähig, homogen |

| | | | | | |
|---|---|---|---|---|---|
| *: Waksol A (Fischer Tropsch Paraffin, Schmelzpunkt 32°C) ^{#}: Storflux Nature **: Sasobit^{®} (Fischer Tropsch Patraffinwachs, Erstarrungspunkt 102°C) ^{##}: Die Homogenität der Verteilung des Fischer Tropsch Paraffinwachses wurde durch Bestimmung der Wachsgehalte in Stichproben mittels DSC untersucht | | | | | |

Das Gummigranulat wird in dem Mischer vorgelegt, der Mischprozess und die damit verbundene Wärmeentwicklung gestartet, und anschließend werden die Quellungsmittel und das Wachs in unterschiedlicher Reihenfolge zudosiert. Durch einen plötzlichen Anstieg der Stromaufnahme (Gradientenmessung) des Mischers bei ca. 85°C wird das Schmelzen des Wachses erkannt und der Mischvorgang beendet. Die Gleichmäßigkeit der Verteilung des Wachses ist in Stichproben mit der Differenz-Kalorimetrie nachweisbar.

Das Beispiel gemäß der Tabelle 1 belegt die Schlüssigkeit insbesondere zu den Merkmalen der Ansprüche 1 bis 10 im Hinblick auf ihre Reproduzierbarkeit.

Sodann wird die Wirkung einiger in nachstehender Tabelle 2 beschriebener Gummi-Quellmittel-Paraffinwachs-Agglomerate auf die Eigenschaften von Bitumen unter Zugabe von 12 Gew. % Gummi, bzw. 18 Gew. % einiger Produkte aus der vorherigen Tabelle1 dargestellt, wobei ein Bitumen Nybit E60 mit einer Nadelpenetration 64 1/10 mm zum Einsatz kommt:

**Tabelle 2**

| Produkt | PEN^{#} [1/10 mm] | RuK [°C]* | Duktilität** [mm] | Elastische Rückstellung^{##} [%] | Viskosität [mPas] |
|---|---|---|---|---|---|
| Gummi | 43 | 59,2 | 173 | 60 | 1380 |
| 1 | 62 | 94,5 | 76 | 54 | 510 |
| 3 | 52 | 87,5 | 90 | 56 | 640 |
| 4 | 46 | 86,5 | 103 | 61 | 650 |

| | | | | | |
|---|---|---|---|---|---|
| *: Erweichungspunkt Ring und Kugel (DIN EN 1427) ^{#}: Nadelpenetration bei 25°C (DIN EN 1426) **: Duktilität bei 25°C DIN EN 13389) ^{##}: Elastische Rückstellung bei 25°C (DIN EN 13389) | | | | | |

Die Agglomerate werden bei 160°C durch Rühren mit dem Bitumen vermischt. Als Vergleichsversuch wurde die entsprechende Menge reine Gummipartikel auf gleiche Weise in Bitumen eingebracht. Die im Vergleich zu der Modifizierung mit reinem Gummi höheren Nadelpenetrationen der Mischungen mit den Produkten 1, 3 und 4 zeigen, dass die Verhärtung des Bitumens durch Aufnahme von Bitumenbestandteilen erheblich verringert und mit Produkt 1 nahezu vollständig verhindert wird. Weiterhin wird die viskositätssenkende Wirkung im Vergleich zu dem Versuch mit reinem Gummi deutlich.

An Hand der Tabellen 3 und 4 wird ein erstes Beispiel für die Herstellung und den Einbau von Asphalt mit erfindungsgemäß hergestellten Agglomeraten erläutert, wobei die Zugabe der Agglomerate als Schüttgut aus Beuteln gewählt wird.

Es soll ein Splittmastixasphalt SMA 16 S mit direkt in den Asphaltmischer zugegeben erfindungsgemäß aktivierten Gummipartikeln hergestellt und auf einer Straße eingebaut werden.

Dabei werden folgende, in einem Fluidmischer hergestellte, aktivierte Gummipartikel eingesetzt, die vor der Quellung eine Partikelgröße von 0,2-0,4 mm aufweisen:

**Tabelle 3**

| Zusammensetzung der verwendeten aktivierten Gummipartikel | | |
|---|---|---|
| | Gummiprodukt M | Gummiprodukt P |
| Anteil Gummipartikel [Gew. %] | 66,7 | 66,7 |
| Art des Quellmittels | Recyceltes, raffiniertes Schmieröl * | Pflanzenöl^{#} |
| Anteil des Quellmittels [Gew. %] | 16,65 | 16,65 |
| Anteil des F T Wachses** [Gew. %] | 16,65 | 16,65 |

| | | |
|---|---|---|
| * : Storflux Premium ^{#}: Storflux Nature **: Sasobit^{®} | | |

Die aktivierten Gummipartikel werden auf einfache Weise in PE-Beuteln mit einem Förderband vor der Zugabe des Bitumens direkt in den Asphaltmischer gegeben. Die Zugabemenge beträgt 11 kg je Tonne Asphaltmischgut, um 12% Gummianteil bezogen auf das Bitumen B 50/70 zu erreichen.
Die Asphaltmischung wird bei 170°C hergestellt.

Bei der Ausbringung auf die Straße beträgt die Temperatur des Asphaltmischgutes im Straßenfertiger 160°C.

Die versuchsweise eingebaute Asphaltmischung und Probebohrkerne aus der fertig gestellten Asphaltschicht zeigt gemäß der Tabelle 4 die folgenden Werte:

**Tabelle 4**

| Eigenschaften der hergestellten Asphalte und die Erweichungspunkte der extrahierten Bindemittel | | |
|---|---|---|
| | Gummiprodukt M | Gummiprodukt P |
| Mineralstoffe Siebdurchgang | | |
| 0,063 mm [Gew. %] | 14,1 | 13,5 |
| 0,25 mm [Gew. %] | 15,5 | 14,5 |
| 0,71 mm [Gew. %] | 17,0 | 16,4 |
| 1,00 mm [Gew. %] | 26,5 | 23,9 |
| 2,00 mm [Gew. %] | 31,9 | 30,1 |
| 5,00 mm [Gew. %] | 43,0 | 40,4 |
| 8,00 mm [Gew. %] | 65,8 | 52,6 |
| 11,20 mm [Gew. %] | 67,4 | 63,0 |
| 16,00 mm [Gew. %] | 98,2 | 98,4 |
| 22,40 mm [Gew. %] | 100,0 | 100,0 |
| Löslicher Bindemittelgehalt [Gew. %] | 6,0 | 5,9 |
| Unlöslicher Gummianteil [Gew. %] | 0,6 | 0,6 |
| Bindemittelgehalt gesamt [Gew. %] | 6,6 | 6,5 |
| Erweichungspunkt RuK [°C] | 75,0 | 74,4 |
| Hohlraumgehalt MPK* [Vol. %] | 2,8 | 2,2 |
| Hohlraumgehalt Bohrkern [Vol. %] | 2,6 | 2,5 |
| Dehnungsrate im Wendepunkt ε_{w} 10⁻⁴ ‰/n** | 0,9 | 0,6 |
| Dehnung nach 10.000 Lastwechseln** | 9,8 | 8,0 |
| Wasserempfindlichkeit Abfall Spaltzugfestigkeit [%] | 15,3 | 8,9 |

| | | |
|---|---|---|
| *: Marshall Probekörper **: TP Asphalt-StB Teil: Einaxialer Druckschwellversuch, 1999 | | |

Durch den Anteil des FT Wachses resultiert in den extrahierten Bindemitteln ein erhöhter Erweichungspunkt RuK. Die geprüften Eigenschaften der Asphalte belegen nach den Versuchen, dass die direkte Zugabe von aktivierten und wachshaltigen Gummipartikeln zu hervorragenden Asphalteigenschaften mit hoher Beständigkeit gegen Verformungen und geringer Wasserempfindlichkeit führt.

Die Vorquellung und die damit erreichte Aktivierung des Gummis verbessert die Herstellung eines gummimodifizierten Bitumens nach dem bekannten Stand der Technik mit den neuen und überraschend aufgezeigten Eigenschaften.

Ein zweites Beispiel für die Herstellung und den Einbau von Asphalt mit erfindungsgemäß hergestellten Agglomeraten wird gemäß der Tabelle 5 erläutert, wobei die Zugabe der Agglomerate als Schüttgut mit pneumatischer Förderung erfolgt.

Mit dem Gummiprodukt M entsprechend dem ersten Beispiel nach Tabelle 3 und einem Bitumen B 50/70 soll bei 170°C ein Splitmastixasphalt SMA 8 Hmb hergestellt werden.

Die aktivierten, wachshaltigen Gummipartikel werden mit einem pneumatischen System in den Asphaltmischer gefördert, bevor das Bitumen zugegeben wird. Üblicherweise wird zwar das pneumatische Fördersystem für die Zugabe von Zellulosefaserpellets verwendet, es kann jedoch vorteilhaft für die Zugabe der erfindungsgemäß hergestellten Agglomerate genutzt werden. Zudem wird bei der Verwendung von Gummi keine Zellulose für die Herstellung von Splittmastixasphalt benötigt.

Bei einer probeweisen Verlegung des Asphaltes können an verschieden Stellen Proben genommen und untersucht werden, die dann nach Tabelle 5 folgende Werte zeigen:

**Tabelle 5**

| Eigenschaften von Asphaltproben und der extrahierten Bindemittel an unterschiedlichen Positionen eines probeweise eingebauten Asphalts | | | |
|---|---|---|---|
| | Probe 1 | Probe 2 | Probe 3 |
| Mineralstoffe Siebdurchgang | | | |
| 0,063 mm [Gew. %] | 12,9 | 13,1 | 13,1 |
| 0,126 mm [Gew. %] | 14,8 | 15,1 | 15,1 |
| 2,00 mm [Gew. %] | 32,4 | 32,5 | 32,6 |
| 5,50 mm [Gew. %] | 61,4 | 62,0 | 61,1 |
| 8,00 mm [Gew. %] | 95,8 | 96,1 | 96,8 |
| 11,2 mm [Gew. %] | 100 | 100 | 100 |
| Löslicher Bindemittelgehalt [Gew. %] | 6,7 | 6,9 | 6,8 |
| Bindemittelgehalt gesamt [Gew. %] | 7,0 | 7,2 | 7,1 |
| Erweichungspunkt RuK [°C] | 87,5 | 87,5 | 88,4 |
| Hohlraumgehalt MPK* [Vol. %] | 2,5 | 2,5 | 2,3 |
| Elastische Rückstellung** [%] | 60 | 60 | 69 |

| | | | |
|---|---|---|---|
| *: Marshall Probekörper **: Bei 25°C nach DIN EN 13398 | | | |

Hervorzuheben ist, dass die Erweichungspunkte und die elastischen Rückstellungen der aus räumlich getrennten Asphaltproben extrahierten Bindemittel Werte aufweisen, die belegen, dass bei der Direktzugabe in den Asphaltmischer eine homogene Verteilung der aktivierten Gummipartikel erreichbar ist und ein gleichmäßig mit erfindungsgemäßen Agglomeraten modifizierter Asphalt mit verbesserten Eigenschaften produzierbar ist.

An Hand der Fig. 1, 2 und 3 wird mit Beispielen auch der erfinderische Prozess - beginnend mit der dem Stand der Technik entsprechenden Modifizierungsstufe 1) bis hin zum Übergang auf den vollen erfinderischen Effekt gemäß den Modifizierungsstufen 5) und 6) nachvollziehbar dargestellt.

Es werden die überraschenden Effekte und Vorteile der Erfindung für das Nassverfahren im Vergleich zu gewöhnlichem Gummibitumen gemäß dem Stand der Technik durch die Messung von wichtigen Eigenschaften in grafischer Darstellung verdeutlicht. Bei alle Versuchen wurden aus 78 Gew. % Bitumen der Penetrationsklasse 80/100 und Reifengummi-Partikeln sowie anderen Additiven und den erfindungsgemäßen aktivierten, gequollenen Schüttgütern durch Rühren bei 180°C Gummi-modifizierten Bitumen hergestellt.

Fig. 1 zeigt die Viskosität der modifizierten Bitumen im zeitlichen Verlauf des Modifizierungsprozesses. Eine erste Modifizierung 1) mit 20 % Reifengummi und 2 % aromatischem Öl entspricht dem Stand der Technik. Mit zunehmender Rührzeit steigt die Viskosität des modifizierten Bitumens durch Quellung des Gummis an. Nach Durchlaufen eines Maximums sinkt die Viskosität durch das partielle Lösen des Gummis wieder ab. Um die gewünschten Eigenschaften hinsichtlich der Verformungsstabilität und Elastizität des damit hergestellten Asphalts zu erhalten, darf nur ein Teil des Gummis gelöst werden. Das Gummi-modifizierte Bitumen kann deshalb nur in einem kurzen Zeitfenster für die Herstellung von Asphalt verwendet werden, das um das Maximum der Viskosität liegt. Wenn durch Störungen in der logistischen Kette Verzögerungen und zu starke Auflösung des Gummis eintreten, kann das Bindemittel nicht mehr verwendet werden. Das Bindemittel muss dann in die Modifizierungsanlage zurückgebracht und aufgearbeitet werden. Dies bedeutet einen erheblichen wirtschaftlichen Schaden für den Bindemittelhersteller und volkswirtschaftlich Verluste durch die Verschiebung der Asphaltierung.

Nach einer zweiten Modifizierung 2) wurde ein Teil des Gummis durch Polyoctenamer ersetzt. Dadurch wird der Verlauf der Viskositätskurve leicht verändert aber die Viskosität bleibt auf dem gleichen hohen Niveau

Gemäß einer dritten Modifizierung 3) wurde das Bitumen mit aktiviertem, gequollenen Schüttgut aus 9/10 Gummipartikeln und 1/10 niedrigschmelzendem Paraffin aus der Fischer-Tropsch Synthese modifiziert. Dieses und die anderen drei Schüttgüter wurden in einem wärmeerzeugenden Fluidmischer hergestellt. Das erhaltene modifizierte Bitumen wies schon eine deutlich reduzierte Viskosität auf.

Eine vierte Modifizierung 4) erfolgte analog zu 3), jedoch wurde das Schüttgut aus 9/10 Gummipartikeln und 1/10 Mineralöl hergestellt. Daraus resultierte eine weiter reduzierte Viskosität des modifizierten Bitumens.

Die fünften und sechsten Modifizierungen 5) und 6) erfolgten analog zu 3), das erfindungsgemäße Schüttgut wurde jedoch aus 4/6 Gummipartikeln, 1/6 FT-Wachs (Erstarrungspunkt 102°C, Sasobit®) und 1/6 Quellmittel, d.h. Mineralöl in 5) sowie niedrigschmelzendes Paraffin aus der Fischer-Tropsch Synthese in 6) hergestellt.

Diese erfindungsgemäß modifizierten Bitumen 5) und 6) weisen die niedrigsten Viskositäten auf und somit die größten Vorteile hinsichtlich der zielgenauen Verdichtung von damit hergestelltem Asphaltmischgut und das größte Potential zur Reduzierung der Temperatur der Herstellung und des Einbaus von Asphalt. Dies bedeutet eine vorteilhafte Verringerung des Energieverbrauchs und eine Reduzierung von Emissionen (Dämpfe und Aerosole aus Bitumen). Im Vergleich zum Stand der Technik wird die Viskosität mindestens halbiert.

Weiterhin ist bei den Modifizierungen 5) und 6) mit den aktivierten, gequollenen Schüttgütern überraschend gefunden worden, dass nach ca. 100 Minuten Rührzeit eine praktisch konstant bleibende Viskosität erreicht wurde. Eine konstante Viskosität bedeutet große verfahrenstechnische und logistische Vorteile für die weitere Verwendung des modifizierten Bitumens, da das Zeitfenster mit der konstanten Viskosität, d.h. dem erforderlichen Verhältnis von Quellung und nur geringer Anlösung des Gummis um ein vielfaches verlängert wird. Somit ist das modifizierte Bitumen in einem erheblich längeren Zeitraum für die Herstellung von Asphalt verwendbar. Dadurch wird die Logistik vereinfacht, die gewünschten Eigenschaften des modifizierten Bindemittels werden mit größerer Sicherheit erreicht und das Risiko, durch zu starke Auflösung des Gummis unbrauchbar gewordene Chargen zurückführen und aufarbeiten zu müssen, wird erheblich verringert.

Die Fig. 2 zeigt die Auswirkungen der Modifizierungen auf den Erweichungspunkt Ring und Kugel des Bitumens. Ein hoher Erweichungspunkt bedeutet eine gute Verformungsbeständigkeit und Standfestigkeit bei hohen Temperaturen im Sommer. Im Vergleich zu der Gummi-Modifizierung gemäß oben 1), also dem Stand der Technik, reduzierte die Verwendung von lediglich mit Quellmittel aktivierten Gummipartikeln in den Modifizierungen zu 3) und 4) den Erweichungspunkt auf nachteilige Weise. Die Verwendung von mit Quellmittel und Wachs hergestellten aktivierten Schüttgütern in den Modifizierungen 5) und 6) bewirkte hingegen eine vorteilhafte starke Erhöhung des Erweichungspunktes.

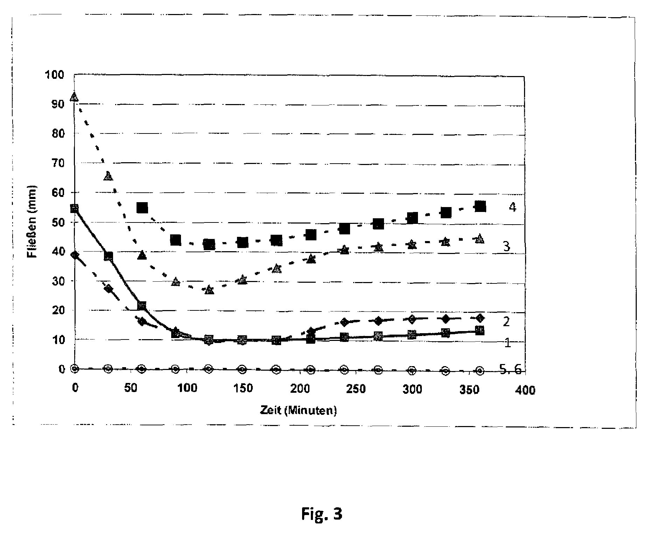

Fig. 3 zeigt die Wirkungen der Modifizierungen auf das Fließen des Bitumens. In der Testmethode SABITA BR 4 T werden Gummi-modifizierte Bitumen auf einer mit 35° geneigten Metallplatte bei 60°C gelagert. Der Fließweg wird nach 4 Stunden gemessen. Im Vergleich zu der Gummi-Modifizierung nach oben 1) gemäß dem Stand der Technik vergrößerte die Verwendung von lediglich mit Quellmittel aktivierten Gummipartikeln den Fließweg. Dies korreliert mit der verringerten Viskosität. Die Modifizierung mit den erfindungsgemäß mit Quellmittel und Wachs hergestellten aktivierten Schüttgütern in den Modifizierungen wie 5) und 6) unterband das Fließen vollständig. Dies ist besonders bemerkenswert, da gleichzeitig die Viskosität im Temperaturbereich der Verarbeitung und Anwendung des modifizierten Bitumens mindestens halbiert wird.

Zugleich überzeugen diese Erläuterungen, dass die Erfindung sich einheitlich von dem Verfahren zur Herstellung eines Schüttgutes von Agglomeraten, die Gummipartikel und Wachs aufweisen, über die Zusammensetzung des verfahrensgemäß hergestellten Agglomerats bis zur Verwendung dieses Schüttgutes für die Herstellung von Asphalt oder Bitumenmassen mit darin verbesserten Eigenschaften gestaltet.

Die vorstehende Erfindung erfüllt mit dem bereitgestellten Verfahren zur Herstellung eines Schüttgutes von Agglomeraten, mit dem bereitgestellten Zwischenprodukt wie die Zusammensetzung des verfahrensgemäß hergestellten Agglomerats und mit der Verwendung dieses Schüttgutes für die Herstellung von Asphalt oder Bitumenmassen mit den darin verbesserten Eigenschaften die Zielrichtung auf das Endprodukt wie Asphalt oder Bitumenmassen. Das wesentliche und neu kombinierte Strukturelement "Gummipartikel und Wachs" mit seinen überraschend neuen Eigenschaften und Wirkungen steht bis hin zum Endprodukt in einem erfinderischen und engen technisch-funktionalen Zusammenhang.

### Gewerbliche Anwendbarkeit

Gegenüber den bekannten, eingangs analysierten Lösungen, wie z.B. offenbart in
- EP 1 873 212 B1, wonach die Modifizierung von Gummipulver durch Quellung mit 2-40 % aromatischen Ölen und die anschließende Modifizierung von Bitumen im Nassverfahren erfolgt und die Vorquellung die Temperatur und die Mischdauer bei der Bitumenmodifizierung reduziert;
- WO/1997/026299 und DE 196 01 285 A1, in denen ein rieselfähiges Granulat aus 50-95 % Gummi und Bitumen oder polymerem Kunststoff (Thermoplastische Elastomere oder Plastomere) beschrieben wird, dessen Bestandteile sich bei Temperaturen > 130°C bei Einwirkung von Scherkräften gleichmäßig verteilen, wobei bis zu 25 % Additive enthalten sein können (Schwefel, Vulkanisationsbeschleuniger, Schweröl, Fettsäuren, Zellulosefasern) und das Granulat aus einer bei hohen Temperaturen in einem Kneter homogenisiert/chemisch verbundenen Masse hergestellt werden oder durch Pressen der Einzelkomponenten bei niedriger Temperatur (Kollergang, Lochscheibe) erzeugt sein kann, um eine Gummiasphaltmischung für Straßendecken durch Zugabe des Granulates in Asphaltmischprozess zu den Mineralstoffen oder zum Bitumen herzustellen;
- Usw712 A1 zur Herstellung von Kalkhydrat-Pellets zur Verwendung bei der Asphaltherstellung und/oder Bodenkonditionierung mit einer Pelletierung des Kalkhydrates mit einem Bindemittel (0,5-69 %), wobei das Kalkhydrat dient der Verbesserung der Wasserbeständigkeit von Asphalt Methode zur Herstellung von Kalkhydrat-Pellets zur Verwendung bei der Asphaltherstellung und/oder Bodenkonditionierung. Pelletierung des Kalkhydrates mit einem Bindemittel (0,5-69. %), wobei das Kalkhydrat der Verbesserung der Wasserbeständigkeit von Asphalt und der Haftung des Bindemittels an den Mineralstoffen dient sowie. Gummi und Wachs in dieser Anmeldung als Bindemittel fungieren, das Bindemittel auf wässriger Basis beruhen oder hydrophob sein kann und zumindest eine der Komponenten wie Bitumen, Plastomere, Elastomere, Gummi, gemahlenes Reifengummi, pre-reacted gemahlenes Reifengummi enthält, das Pellet bis zu 30 % eines Additivs enthalten (aliphatisches Erdöldestillat, Plastomere, Elastomere, Gummi, pre-reacted Reifengummi) kann und als zusätzliche Komponente Rheology-modifier, structural additive, Lösungsmittel, Farbstoffe vorhanden sein kann, des Weiteren organische Bindemittel für das Pellet Öle und Wachse angegeben werden sowie das Pellet in seiner Ausgestaltung aus einem Kern aus Kalkhydrat und einer Schale des Bindemittels und die Schale aus Bitumen und Hochtemperatur Wachsen bestehen kann;
- WO 94/14896 / CA 2152774 zur Herstellung einer Bitumenzubereitung, wobei Gummipartikel aus Altreifen durch Erhitzung und Scherung in einem aromatenreichen Kohlenwasserstofföl gequollen und zumindest partiell depolymerisiert werden und dieses Material in Bitumen dispergiert wird und ein Compatibilizer (flüssiges Gummi) sowie, falls erforderlich, ein Vernetzer zugesetzt werden, um ein lagerstabiles Bindemittel zu erhalten, sodann ein Masterbatch mit 25-80 % dispergiertem, stabilisiertem Gummi in Bitumen mit Füllern und Polymeren zu einem Pellet geformt wird;
- DE 601 21 318 T2 zur Herstellung eines körnigen Kautschukmaterials und dessen Verwendung in Bitumen mit Körnchen aus Kautschuk, z.B. aus Altreifen, und einem Thermoklebstoff (Polyolefine, z.B. PE, PP, EVA) mit optionalem Zusatz von Fasern in einem Strangpressverfahren, wobei die durch Reibung entstehende Wärme von 80-300°C den Thermoklebstoff schmilzt;
- DE 44 30 819 C1, wonach zur Herstellung von Bitumengemischen, insbesondere Straßenbauasphalt, Gummi und Aktivkohle zugesetzte werden und die Aktivkohle dampf-/ gasförmige Emissionen bei der Herstellung von Heißasphalt und die Elution von Schadstoffen durch Wasser bei mit teerhaltigem Recyling-Asphalt hergestelltem Kaltasphalt verringert und das Gummi gemeinsam mit oder getrennt von der Aktivkohle vor dem Bitumen auf die heißen Mineralstoffe gegeben oder zuvor mit dem Bitumen gemischt wird;
- CH 694 430 A5 bei einem Gussasphalt mit Zusatz von Gummigranulat, vorzugsweise aus Altreifen, wobei die im Vergleich zum Gussasphalt niedrigere Dichte des Gummigranulates zu einer Anreicherung an der Oberfläche der Asphaltschicht führt und auf die Elastifizierung der Oberfläche, Lärmdämmung, Verbesserung der Gleitschutzeigenschaften des Gussasphalts gezielt wird;
bestehen die Vorteile der Erfindung darin, dass
- die gequollenen Pellets eine zusätzliche Wachskomponente einbringen, die viskositätsreduzierend wirkt (Vorteile für Verarbeitung, zielsichere Verdichtung, Energieeinsparung, Emissionsreduzierung) und bei Umgebungstemperatur den Widerstand des Asphalts gegen Verformung erhöhen,
- die Gummipartikel durch Quellung aktiviert werden und durch intensive Wechselwirkung mit dem Bitumen die Asphalteigenschaften verbessern,
- die Quellung vor der Agglomeration verhindert, dass bei Quellung des Gummis in Asphalt dem Bitumen ölige Bestanteile entzogen werden und zu einer Verhärtung des Bitumens führt,
- das optionale Polyoctenamer die Kompatibilität von Gummi und Bitumen durch chemische Vernetzung verbessert,
- keine gesundheits-/umweltschädigenden aromatischen Öle verwendet, sondern unbedenkliche naphthenische Mineralöle, paraffinische Mineralöle, recycelte Schmieröle, Paraffine aus der Fischer-Tropsch Synthese oder nachwachsende native Öle verwendet werden und
- das erfindungsgemässe Produkt agglomeriert in einer Form vor liegt, die leicht und sicher (Staubexplosionen) gelagert, transportiert und mit den in Asphaltmischanlagen üblicherweise vorhandenen Anlagen dosiert (pneumatischen Förderung, Schneckenförderung) werden kann, wodurch es für die Direktzugabe in den Asphaltmischer geeignet ist und den Aufwand (Zeit, Energie, Investition für Modifizierungsanlage) für die vorherige Bitumenmodifizierung senkt,
wodurch eine breite gewerbliche Nutzung absehbar ist.

## Patentansprüche

1. Verfahren zur Herstellung eines Schüttgutes von Agglomeraten, die Gummipartikel und aus der Gruppe der Erdölparaffine, Fischer-Tropsch Paraffine, Amidwachse, Montanwachse, Polymerwachse, Ester des Glycerins ausgewählte Wachse mit Erstarrungspunkt über 50°C aufweisen, durch quellende Vorreaktion der Gummipartikel und einer Zugabe von Wachs mit den Verfahrensschritten
a) Aktivierung des Gummis durch Quellung bei minim. 83°C bis max. 120°C und Verwendung eines Quellmittels aus naphthenischen oder paraffinischen Mineralölen, recycelten Schmierölen, nativen Ölen oder bei 20-40°C schmelzenden Paraffinen aus der Fiseher-Tropsch Synthese unter Ausschluß von aromatenreichen Ölen,
b) Zugabe einer Schmelze aus auf Bitumen viskositätsreduzierend wirkendem, über 50°C schmelzendem Wachs, wobei durch den Anstieg der Stromaufnahme (Gradientenmessung) des Mischers bei ca. 85°C das Schmelzen des Wachses erkannt und der Mischvorgang beendet wird, und optionalem Polyoctenamer zu den durch Quellung aktivierten Gummipartikeln,
c) Agglomeration der durch Quellung aktivierten Gummipartikel mit dem viskositätsreduzierenden Wachs und optionalen adhäsionsverbessernden Stoffen wie Harzen oder Polyisobutenen durch mischende Vermengung oder Einwirkung von Druck derart, dass das Quellungsmittel in die Zwischenräume der Gummimoleküle eindringt und die Moleküle auseinander drängt und die physikalischen Anziehungskräfte verringert oder unterbrochen werden, wobei
d) im Agglomerat durch das zu einer Viskositätsminderung führende größere Volumen und die Erweichung eine innigere und homogenere Benetzung mit dem Wachs sowie eine erhöhte Stabilität der Vernetzung der Gummimoleküle untereinander hergestellt wird.

2. Verfahren nach Anspruch 1, **gekennzeichnet durch** die Verwendung reiner, bei Umgebungstemperatur gewonnener Gummipartikel aus mechanisch erzeugten Siebfraktionen.

3. Verfahren nach Anspruch 1, **gekennzeichnet durch** die Verwendung reiner, kryogenisch gewonnener Gummipartikel aus mechanisch erzeugten Siebfraktionen.

4. Verfahren nach Anspruch 1, **gekennzeichnet durch** die Verwendung eines Gemisches aus reinen, sowohl bei Umgebungstemperatur als auch kryogenisch gewonnenen Gummipartikeln aus mechanisch erzeugten Siebfraktionen.

5. Verfahren nach einem der Ansprüche 1 bis 4, **gekennzeichnet durch** die Bildung einer durch die Zugabe von Wachs bewirkten Schicht auf den **durch** Quellung aktivierten Gummipartikeln.

6. Verfahren nach einem der Ansprüche 1 bis 5, **gekennzeichnet durch** die Zugabe von Wachs mit 1 - 50 Gew. % der Schmelze aus Wachs bezogen auf den Gummianteil.

7. Verfahren nach einem der Ansprüche 1 bis 5, **gekennzeichnet durch** die Zugabe von Wachs mit 25 - 35 Gew. % der Schmelze aus Wachs bezogen auf den Gummianteil.

8. Verfahren nach einem der Ansprüche 1 bis 5, **gekennzeichnet durch** die Zugabe von Polyoctenamer mit einem Anteil in der Wachsschmelze von 1 - 50 Gew. %.

9. Verfahren nach einem der Ansprüche 1 bis 5, **gekennzeichnet durch** die Zugabe von Polyoctenamer mit einem Anteil in der Wachsschmelze von 25 - 35 Gew. %.

10. Verfahren nach einem der Ansprüche 1 bis 9, **gekennzeichnet durch** die Zugabe von
0,1 - 5 Gew. % adhäsionsverbessernden Stoffen, wie Harzen oder Polyisobutenen zur Intensivierung der Agglomeration.

11. Verfahren nach einem der Ansprüche 1 bis 10, **gekennzeichnet durch** die Zugabe der Wachsschmelze innerhalb von ca. 2 - 3 min zu den **durch** Quellung zu aktivierenden Gummipartikeln.

12. Verfahren nach einem der Ansprüche 1 bis 11, **gekennzeichnet durch** die Verwendung der Agglomerate bei der Herstellung von Asphalten oder Bitumenmassen **durch** direkte Zugabe in einer Mischanlage für Asphaltmischgüter oder Bitumenmassen.

13. Verfahren nach einem der Ansprüche 1 bis 12, **gekennzeichnet durch** die mischende Vermengung zu einem Pellet mittels
a) beheiztem mechanischem Mischer
b) Pressverfahren mit Kollergang und formgebender Matrize
c) Extrudierverfahren oder
d) wärmeerzeugendem Mischer als Friktionsmischer, Fluidmischer oder Turbomischer.

14. Verfahren nach einem der Ansprüche 1 bis 13, **gekennzeichnet durch** die Zugabe der Gummipartikel mit Wachs und die Ausbildung von Agglomeraten in zwei aufeinander folgenden Prozessschritten.

15. Agglomerat, hergestellt nach dem Verfahren nach einem der Ansprüche 1 bis 12, insbesondere Pellet, aus Gummipartikeln und Wachs, aufweisend
a) Gummipartikel mit einer Korngrößenverteilung zwischen 0,05 und 5 mm,
b) eine die Gummipartikel beschichtende Schmelze aus Wachs mit einem Anteil von 1 - 50 Gew. % bezogen auf den Gummianteil und
c) ein aufgenommenes Quellmittel in den Gummipartikel im Bereich von 1 % und 100% der maximal aufnehmbaren Menge des Quellmittels.

16. Agglomerat nach Anspruch 15, **gekennzeichnet durch** seine Herstellung als Schüttgut mit trockener Oberfläche innerhalb von 15 min **durch** vermischende oder agglomerierende Verfahren.

17. Verfahren zur Herstellung von Asphalt oder eines Mischgutes mit einer Bitumenmasse oder einer Bitumenmasse unter Verwendung eines Schüttgutes aus nach den Ansprüchen 1 bis 14 hergestellten Agglomeraten und Agglomeraten nach den Ansprüchen 15 oder 16, **dadurch gekennzeichnet, dass** während der Vermischung das Quellungsmittel in die Zwischenräume der Gummimoleküle eindringt, die Moleküle auseinander gedrängt und die physikalischen Anziehungskräfte verringert oder unterbrochen werden, wobei eine bis zu 180 min in dem Mischgut stabil bleibende Viskositätsminderung hergestellt wird und bei der über diese Zeit wirkenden Viskositätsminderung eine erhöhte Stabilität der Vernetzung der Gummimoleküle untereinander nach Einarbeitung der Agglomerate und eine bis zu 180 min dauernden Stabilität einer solchen Zubereitung erhalten wird.

18. Verfahren nach Anspruch 17 **dadurch gekennzeichnet, dass** zur Reduzierung der Temperaturen bei der Herstellung und Anwendung des Asphalts die Agglomerate direkt mit einem Anteil von 1 - 30 Gen. % bezogen auf den Anteil von Bitumen vor, während oder nach der Zugabe des Bitumens in den Asphaltmischer zugegeben werden.

19. Verfahren nach Anspruch 17 oder 18, **gekennzeichnet durch** die direkte Zugabe der Agglomerate mit einem Anteil von 5 - 30 Gew. %.

20. Verfahren nach einem der Ansprüche 17 bis 19, **dadurch gekennzeichnet, dass**
a) die Zugabe 3 bis 15 Sekunden vor der Zugabe des Bitumens erfolgt,
b) innerhalb dieses Zeitraums durch die höhere Temperatur und die starken Scherkräfte die Agglomerate rasch aufgeschlossen und die Gummipartikel vorverteilt werden, wobei eine thermische Aktivierung des Gummis erfolgt,
c) im Mischprozess die Wärme das Wachs verflüssigt und die aktivierten Gummipartikel rasch frei gibt,
d) die durch Vorquellung aktivierten Gummipartikel eine intensive Wechselwirkung wie Umhüllung mit dem Bitumen herstellen und
e) die Mischtemperatur in der Dimension von 130 bis 190°C eingestellt wird.

21. Asphaltmischgut oder Mischgut mit Bitumenmasse oder Bitumenmasse, hergestellt nach dem Verfahren gemäss den Ansprüchen 17 bis 20, **gekennzeichnet durch**
a) eine Einbautemperatur von 120 bis 230°C,
b) einen Verdichtungsgrad in den Dimensionen von 98 bis 103% ,
c) eine Spaltzugfestigkeit in den Dimensionen von 1,70 bis 3,00 N/mm²,
d) eine Spaltzugfestigkeit nach Wasserlagerung in den Dimensionen von 1,50 bis 2,50 N/mm² und
e) eine Widerstandfähigkeit gegen Verformungen, gemessen als Dehnungsrate im einaxialen Druckschwellversuch in den Dimensionen von 0,6 bis 0,9 * 10⁻⁴/n ‰.

22. Asphaltmischgut oder Mischgut mit Bitumenmasse oder Bitumenmasse nach Anspruch 21, **gekennzeichnet durch** eine sowohl **durch** das Quellmittel als auch **durch** das Wachs zusammenwirkende Senkung der Viskosität der Bitumenmasse gegenüber ihrer Ausgangsviskosität bei einer bis zu < 180 min in dem Mischgut andauernden Stabilität der Viskositätsminderung und erhöhten Stabilität der Vernetzung der Gummimoleküle sowie Stabilität des Asphaltmischgutes oder Mischgutes mit Bitumenmassen oder der Bitumenmasse.

23. Verwendung von Bitumenmassen mit Agglomeraten nach den Ansprüchen 1 bis 16 für eine Oberflächenbehandlung von Verkehrswegen durch Versprühen der Bitumenmassen und Aufbringung von Mineralstoffen.

## Claims

1. A process for preparing bulk material of agglomerates containing rubber particles and selected waxes having a solidification point above 50° C from the group of crude oil paraffins, Fischer-Tropsch paraffins, amide waxes, montan waxes, polymer waxes, and esters of glycerol by swelling pre-reaction of the rubber particles and an addition of wax, comprising the process steps of
a) activation of the rubber by swelling at min. 83°C to max. 120°C and use of a swelling agent of naphthenic or paraffinic mineral oils, recycled lubricating oils, natural oils or paraffins melting at 20-40°C from Fischer-Tropsch synthesis excluding aromatic aromatic-rich oils,
b) addition of a melt of wax melting above 50°C having a viscosity-reducing effect on bitumen, wherein, by increase of the current consumption (gradient measurement) of the mixer at approx. 85°C, the melting of the wax is detected and the mixing process is stopped, and of optional polyoctenamer to the rubber particles activated by swelling,
c) agglomeration of the rubber particles activated by swelling with the viscosity-reducing wax and optional adhesion-enhancing materials like resins or polyisobutenes by mixing mingling or influence of pressure in such a manner that the swelling agent penetrates the spaces between the rubber molecules and drives the molecules apart and the physical forces of attraction are reduced or interrupted, wherein
d) by the higher volume leading to a reduction of viscosity and the softening, there is caused in the agglomerate a more intimate and more homogeneous wetting with the wax as well as a higher stability of the cross-linking of the rubber molecules with one another.

2. A process according to Claim 1, **characterized by** the use of pure rubber particles obtained at ambient temperature from mechanically generated screen fractions.

3. A process according to Claim 1, **characterized by** the use of pure rubber particles obtained cryogenically from mechanically generated screen fractions.

4. A process according to Claim 1, **characterized by** the use of pure rubber particles obtained both at ambient temperature and cryogenically from mechanically generated screen fractions.

5. A process according to one of Claims 1 to 4, **characterized by** the formation of a layer on the rubber particles activated by swelling, which is caused by the addition of wax.

6. A process according to one of Claims 1 to 5, **characterized by** the addition of a wax fraction amounting to 1-50 wt.-% of the wax melt relative to the fraction of the rubber particles.

7. A process according to one of Claims 1 to 5, **characterized by** the addition of a wax fraction amounting to 25 - 35 wt.-% of the wax melt relative to the fraction of the rubber particles.

8. A process according to one of Claims 1 to 5, **characterized by** the addition of polyoctenamer with a fraction of 1-50 wt.-% in the wax melt.

9. A process according to one of Claims 1 to 5, **characterized by** the addition of polyoctenamer with a fraction of 25-35 wt.-% in the wax melt.

10. A process according to one of Claims 1 to 9, **characterized by** the addition of 0,1 - 5 wt.-% of adhesion-enhancing materials such as resins or polyisobutenes for intensifying the agglomeration.

11. A process according to one of Claims 1 to 10, **characterized by** the addition of the wax melt to the rubber particles to be activated by swelling within approx. 2 - 3 min.

12. A process according to one of Claims 1 to 11, **characterized by** the use of the agglomerates in the preparation of asphalts or bituminous materials by direct addition into a mixing plant for asphalt mixes or bituminous materials.

13. A process according to one of Claims 1 to 12, **characterized by** the mixing mingling into a pellet by means of a
a) heated mechanical mixer,
a) pressing process with edge mill and a shaping die,
b) extrusion process, or
c) heat-generating mixer embodied as a friction mixer, a fluid mixer or a turbo mixer.

14. A process according to one of Claims 1 to 13, **characterized by** the addition of the rubber particles with wax and the formation of agglomerates in two successive process steps.

15. Agglomerate prepared by the process according to one of Claims 1 to 12, in particular pellets, of rubber particles and wax having
a) rubber particles with a particle size distribution between 0.05 and 5 mm,
b) a melt of wax coating the rubber particles with a fraction of 1-50 wt.-% relative to a rubber fraction, and
c) a swelling agent absorbed in the rubber particles in a range of 1 % and 100% of the maximum absorbable quantity of the swelling agent.

16. Agglomerate according to Claim 15, **characterized by** its preparation as bulk material with a dry surface within 15 min by mixing or agglomerating processes.

17. A process for preparing asphalt or a mixed material with a bituminous material or a bituminous material using bulk material of agglomerates prepared according to Claims 1 to 14 and agglomerates according to Claim 15 or 16, **characterized in that**, during the mixing, the swelling agent penetrates the spaces between the rubber molecules, the molecules are driven apart and the physical forces of attraction are reduced or interrupted, wherein a reduction of viscosity remaining stable in the mixed material for up to 180 min is produced and, with the reduction of viscosity effective over this period, there are obtained an increased stability of the cross-linking of the rubber molecules with one another after incorporation of the agglomerates and a stability of such preparation that lasts for up to 180 min.

18. A process according to of Claim 17, **characterized in that**, for reducing the temperatures in the preparation and application of the asphalt, the agglomerates are added directly with a fraction of 1-30 wt.-% relative to the fraction of bitumen before, during or after addition of the bitumen into the asphalt mixer.

19. A process according to of Claim 17 or 18, **characterized by** the direct addition of the agglomerates with a fraction of 5-30 wt.-%.

20. A process according to one of Claims 17 to 19, **characterized in that**
a) the addition is carried out 3 to 15 seconds prior to the addition of the bitumen,
b) due to the increased temperature and increased shear forces, the agglomerates are rapidly disintegrated and the rubber particles are pre-dispensed within this period, the rubber being thermally activated,
c) the heat liquefies the wax in the mixing process and rapidly releases the activated rubber particles,
d) the rubber particles activated by pre-swelling produce a more intense interaction such as coating with the bitumen, and
e) the mixing temperature is adjusted in a range of 130 to 190° C.

21. Asphalt mix or mixed material with bituminous material or bituminous material prepared by the process according to Claims 17 to 20, **characterized by**
a) a placement temperature of 120 to 230° C,
b) a degree of compaction in a range of 98 to 103%,
c) a splitting tensile strength in a range of 1.70 to 3.00 N/mm²,
d) a splitting tensile strength after storage in water in a range of 1.50 to 2.50 N/mm², and
e) a resistance against deformations, measured as an elongation rate in an uniaxial pressure threshold test in a range of 0.6 to 0.9*10⁻⁴/n ‰.

22. Asphalt mixture or mixed material with bituminous material or bituminous material according to Claim 21, **characterized by** a reduction in the viscosity of the bituminous material in relation to its initial viscosity accomplished due to cooperation of the swelling agent and the wax with a stability of the reduction of the viscosity in the mixture lasting for up to <180 min and an increased stability of the cross-linking of the rubber molecules as well as stability of the asphalt mixture or mixed material with bituminous material or the bituminous material.

23. Use of bituminous materials with agglomerates according to Claims 1 to 16 for a surface treatment of traffic routes by spray-application of the bituminous materials and application of mineral matter.

## Revendications

1. Procédé destiné à fabriquer un produit en vrac d'agglomérés comportant des particules de caoutchouc et des cires choisies dans le groupe comprenant les paraffines de pétrole, les paraffines de Fischer-Tropsch, les cires d'amide, les cires de lignite, les cires polymères, les esters de la glycérine avec un point de solidification supérieur à 50 °C, par pré-réaction gonflante des particules de caoutchouc et un ajout de cire, comportant les étapes de procédé :
a) de l'activation du caoutchouc par gonflement à un minimum de 83 °C jusqu'à un maximum de 120 °C et utilisation d'un agent gonflant constitué d'huiles minérales naphténiques ou paraffiniques, d'huiles lubrifiantes recyclées, d'huiles natives ou de paraffines de la synthèse de Fischer-Tropsch, fondant à de 20 à 40 °C sous exclusion des huiles aromatiques,
b) de l'ajout aux particules de caoutchouc activées par gonflement d'une masse fondue de cire agissant par réduction de la viscosité du bitume, fondant à plus de 50 °C, du fait de l'augmentation de la consommation de courant (mesure du gradient) du mélangeur à env. 85 °C, la fonte de la cire étant identifiée et le processus de mélange s'achevant et de polyocténamères en option,
c) de l'agglomération des particules de caoutchouc activées par gonflement avec la cire réductrice de viscosité et des matières optionnelles améliorant l'adhésion, comme des résines ou des polyisobutènes par amalgame par mélange ou par action d'une pression, de telle sorte que le produit de gonflement pénètre dans les espaces intermédiaires des molécules de caoutchouc et écarte les molécules et réduise ou interrompe la force d'attraction physique,
d) du fait du plus grand volume conduisant à une réduction de la viscosité et du ramollissement, une humectation plus intime avec la cire, ainsi qu'une stabilité plus élevée de l'humectation des molécules de caoutchouc entre elles étant établies dans les agglomérés.

2. Procédé selon la revendication 1, **caractérisé par** l'utilisation de particules de caoutchouc pures, récupérées à température ambiante à partir de fractions de tamisage créées mécaniquement.

3. Procédé selon la revendication 1, **caractérisé par** l'utilisation de particules de caoutchouc pures, récupérées par cryogénie à température ambiante à partir de fractions de tamisage créées mécaniquement.

4. Procédé selon la revendication 1, **caractérisé par** l'utilisation d'un mélange de particules de caoutchouc pures, récupérées aussi bien à température ambiante que par cryogénie à partir de fractions de tamisage créées mécaniquement.

5. Procédé selon l'une quelconque des revendications 1 à 4, **caractérisé par** la création d'une couche provoquée par l'ajout de cire sur les particules de caoutchouc activées par gonflement.

6. Procédé selon l'une quelconque des revendications 1 à 5, **caractérisé par** l'ajout de cire à raison de 1 à 50 % en poids de la masse fondue de cire, en rapport à la part de caoutchouc.

7. Procédé selon l'une quelconque des revendications 1 à 5, **caractérisé par** l'ajout de cire à raison de 25 à 35 % en poids de la masse fondue de cire, en rapport à la part de caoutchouc.

8. Procédé selon l'une quelconque des revendications 1 à 5, **caractérisé par** l'ajout de polyocténamères dans une part de 1 à 50 % en poids dans la masse fondue de cire.

9. Procédé selon l'une quelconque des revendications 1 à 5, **caractérisé par** l'ajout de polyocténamères dans une part de 25 à 35 % en poids dans la masse fondue de cire.

10. Procédé selon l'une quelconque des revendications 1 à 9, **caractérisé par** l'ajout de 0,1 à 5 % en poids de matières améliorant l'adhésion, comme des résines ou des polyisobutènes pour intensifier l'agglomération.

11. Procédé selon l'une quelconque des revendications 1 à 10, **caractérisé par** l'ajout de la masse fondue de cire dans un temps d'approximativement 2 à 3 mn aux particules de cire devant être activées par gonflement.

12. Procédé selon l'une quelconque des revendications 1 à 11, **caractérisé par** l'utilisation des agglomérés pour la fabrication d'asphaltes ou de masses de bitume par ajout direct dans une installation mélangeuse pour produits mixtes à base d'asphalte ou masses de bitumes.

13. Procédé selon l'une quelconque des revendications 1 à 12, **caractérisé par** l'amalgame par mélange en un pellet à l'aide
a) d'un mélangeur mécanique chauffé,
a) d'un procédé de compression par broyeur à meules et matrice de façonnage,
b) d'un procédé d'extrusion ou
c) d'un mélangeur générateur de chaleur en tant que mélangeur à friction, mélangeur de fluides ou turbo-mélangeur.

14. Procédé selon l'une quelconque des revendications 1 à 13, **caractérisé par** l'ajout des particules de caoutchouc avec de la cire et la création d'agglomérés en deux étapes de processus successives.

15. Agglomérés, fabriqués d'après un procédé selon l'une quelconque des revendications 1 à 12, notamment pellets à partir de particules de caoutchouc et de cires, comportant :
a) des particules de caoutchouc d'une répartition granulométrique comprise entre 0,05 et 5 mm,
b) une masse fondue de cire recouvrant les particules de caoutchouc, avec une part de 1 à 50 % en poids, en rapport à la part de caoutchouc
c) un produit gonflant absorbé dans les particules de caoutchouc, dans l'ordre de 1% et 100% de la quantité maximale absorbable du produit gonflant..

16. Agglomérés selon la revendication 15, **caractérisés par** leur fabrication en tant que produit en vrac à surface sèche dans un temps de 15 mn, par des procédés de mélange ou d'agglomération.

17. Procédé destiné à fabriquer de l'asphalte ou un produit mixte avec une masse de bitume ou une masse de bitume en utilisant un produit en vrac d'agglomérés fabriqués selon les revendications 1 à 14 et des agglomérés selon les revendications 15 ou 16, **caractérisé en ce que** pendant le mélange, le produit de gonflement pénètre dans les espaces intermédiaires des molécules de caoutchouc, les molécules sont écartées et les forces d'attraction physiques sont réduites ou interrompues, une réduction de la viscosité restant stable jusqu'à 180 mn dans le produit mélangé étant établie et lors de la réduction de viscosité agissant pendant ce temps, une stabilité élevée de l'humectation des molécules de caoutchouc entre elles après incorporation des agglomérés et une stabilité durant jusqu'à 180 mn d'une telle préparation étant maintenue.

18. Procédé selon la revendication 17, **caractérisé en ce que** pour la réduction des températures lors de la fabrication et de l'utilisation de l'asphalte, les agglomérés sont ajoutés directement à raison d'une part de 1 à 30 % en poids, en rapport à la part de bitume avant, pendant ou après l'ajout du bitume dans le mélangeur d'asphalte.

19. Procédé selon la revendication 17 ou 18, **caractérisé par** l'ajout direct des agglomérés dans une part de 5 à 30 % en poids.

20. Procédé selon l'une quelconque des revendications 17 à 19, **caractérisé en ce que**
a) l'ajout s'effectue à de 3 à 15 secondes avant l'ajout du bitume,
b) dans cette période, du fait des températures plus élevées et des importantes forces de cisaillement, les agglomérés sont rapidement désagrégés et les particules de caoutchouc sont pré-distribuées, alors qu'il s'effectue une activation thermique du caoutchouc,
c) au cours du processus de mélange, la chaleur liquéfie la cire et libère rapidement les particules de cire activées,
d) les particules de caoutchouc activées par pré-gonflement établissent une interaction intensive, telle qu'un enrobage avec le bitume et
e) on règle la température de mélange dans l'ordre de 130 à 190 °C.

21. Produit mixte à base d'asphalte ou produit mixte avec une masse de bitume ou masse de bitume, fabriqué(e) d'après le procédé selon les revendications 17 à 20, **caractérisé par**
a) une température d'incorporation de 120 à 230 °C,
b) un taux de compression de 98 à 103% ,
c) une résistance à la compression diamétrale dans les dimensions de 1,70 à 3,00 N/mm²,
d) une résistance à la compression diamétrale après absorption d'eau dans les dimensions de 1,50 à 2,50 N/mm² et
e) une résistance aux déformations, mesurée en tant que taux d'allongement lors d'un essai à la pression fluctuante dans les dimensions de 0,6 à 0,9 * 10⁻⁴/n ‰.

22. Produit mixte à base d'asphalte ou produit mixte avec une masse de bitume ou masse de bitume selon la revendication 21, **caractérisé par** une baisse due aussi bien au produit gonflant qu'à la cire en concours de la viscosité de la masse de bitume par rapport à sa viscosité initiale à une stabilité durable jusqu'à < 180 mn dans le produit mixte de la réduction de la viscosité et une stabilité élevée de la réticulation des molécules de caoutchouc, ainsi qu'une stabilité du produit mixte à base d'asphalte ou du produit mixte avec des masses de bitume ou de la masse de bitume.

23. Utilisation de masses de bitume avec des agglomérés selon les revendications 1 à 16 pour un traitement de surface de voies de circulation par vaporisation des masses de bitume et application de matières minérales.
